# EUROPEAN PATENT SPECIFICATION

(11) **EP 1 863 252 B1**
(45) Date of publication and mention of the grant of the patent: **17.03.2010**
(21) Application number: 06014072.0
(22) Date of filing: 06.07.2006
(51) Int. Cl.: H04L 29/06

(54) **Mobile IP route optimisation in IP protocol version transition scenarios**
Optimierung von Mobile-IP-Routing in Szenarien mit Übergängen zwischen mehreren IP-Protokollversionen
Optimisation de l'acheminement d'un système mobile IP dans un contexte de transition des versions du protocole IP

(30) Priority: 29.05.2006 EP 06011019
(43) Date of publication of application: 05.12.2007
(60) Divisional application: 10150001.5
(73) Proprietor: Panasonic Corporation, Kadoma-shi Osaka 571-8501 (JP)
(72) Inventor: Weniger, Kilian, Dr., 63225 Langen (DE); Bachmann, Jens, Dr., 63225 Langen (DE); Schuringa, Jon, Dr., 63225 Langen (DE)
(74) Representative: Grünecker, Kinkeldey, Stockmair & Schwanhäusser Anwaltssozietät

(56) References cited:
- US-A1- 2005 083 969
- RONG ZHENG ET AL: "A case for mobility support with temporary home agents" COMPUTER COMMUNICATIONS AND NETWORKS, 2001. PROCEEDINGS. TENTH INTERNATIONAL CONFERENCE ON 15-17 OCT. 2001, PISCATAWAY, NJ, USA,IEEE, 15 October 2001 (2001-10-15), pages 226-233, XP010562099 ISBN: 0-7803-7128-3
- HESHAM SOLIMAN ET AL: "Dual Stack Mobile IPv6" IETF STANDARD-WORKING-DRAFT, INTERNET ENGINEERING TASK FORCE, IETF, CH, no. 2, July 2005 (2005-07), XP015040090 ISSN: 0000-0004

## Description

### Field of the Invention

The invention relates to optimized routing in mobile packet-based communication networks, especially regarding IP version transition issues. It describes a system and method to support Mobile IP route optimization in certain IP version transition scenarios.

### Technical Background

Communications systems evolve more and more towards an Internet Protocol (IP)-based network. They consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

If a terminal is mobile, from now on called Mobile Node (MN), and moves between subnets, it must change its IP address to a topological correct one because of the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 [D. Johnson, C. Perkins, J. Arkko, "Mobility Support in IPv6", IETF RFC 3775, June 2004] is an IP-based mobility protocol that enables MNs to move between subnets in a manner transparent for higher layers and applications, i.e. without breaking higher-layer connections. Therefore, a MN has two IP addresses configured: a Care-of-Address (CoA) and a Home Address (HoA). The MN's higher layers use the HoA for communication with the communication partner (destination terminal), from now on called Corresponding Node (CN). This address does not change and serves the purpose of identification of the MN. Topologically, it belongs to the Home Network (HN) of the MN. In contrast, the CoA changes on every movement resulting in a subnet change and is used as the locator for the routing infrastructure. Topologically, it belongs to the network the MN is currently visiting. One out of a set of Home Agents (HA) located on the home link maintains a mapping of the MN's CoA to MN's HoA and redirects incoming traffic for the MN to its current location. Reasons for having a set of HAs instead of a single HA are redundancy and load balancing.

Mobile IPv6 currently defines two modes of operation: bi-directional tunnelling and route optimization. If bi-directional tunnelling is used, data packets sent by the CN and addressed to the HoA of the MN are intercepted by the HA in the HN and tunnelled to CoA of the MN. Data packets sent by the MN are reverse tunnelled to the HA, which decapsulates the packets and sends them to the CN. For this operation, only the HA must be informed about the CoA of the MN. Therefore, the MN sends Binding Update (BU) messages to the HA. These messages are sent over an IPsec security association and thus are authenticated and integrity protected. Since the CN is not aware of the CoA of the MN, it cannot derive the location of the MN and, thus, location privacy is provided. However, if the MN is far away from the home network and the CN is close to the MN, the communication path is unnecessarily long, resulting in inefficient routing and high packet delays.

The route optimization mode can prevent this inefficiency by using the direct (end-to-end) path between CN and MN. Therefore, the MN sends BU messages to the CN, which then is able to directly send data packets to the MN (a type 2 routing header is used to send the packets on the direct path). Of course, the CN has to implement Mobile IPv6 route optimization support. To authenticate the BU message, the MN and the CN perform a so-called return routability procedure, which tests the reachability of the MN at the HoA and CoA and generates a shared session key.

Recently, Mobile IPv6 has been extended to enable MNs to dynamically bootstrap with HAs [G. Giaretta, J. Kempf, V. Devarapalli, "Mobile IPv6 bootstrapping in split scenario", draft-ietf-mip6-bootstrapping-split-02.txt, March 2006]. Bootstrapping includes discovering a HA, configuring a corresponding HoA, and setting up IPsec security associations with this HA. A MN can bootstrap with a local HA to optimize the route in bi-directional tunnelling mode. However, this potentially breaks location privacy support, since the HoA (which is usually known by CN) now contains location information. For instance, if the CN knows that the HA is local to the MN (e.g., it is the operator's policy to bootstrap with local HAs), it can deduce the MN's location based on the MN's HoA. Furthermore, changing the HA by bootstrapping requires changing the HoA, which means that ongoing data sessions would break. Hence, route optimization of ongoing data sessions is not supported.

The network operators cannot switch all terminals and network equipment to IPv6 in a coordinate effort at a single moment. Instead, the transition from IPv4 to IPv6 will happen slowly. The strategy recommended by the IETF (Internet Engineering Task Force) is to use dual stack nodes, i.e., hosts and servers implement both an IPv4 and an IPv6 stack (R. Gilligan, E. Nordmark, "Transition Mechanisms for IPv6 Hosts and Routers", RFC 2893, August 2000). Hence, access networks can be lPv4-only, lPv6-only or support both, from now on called dual.

The Mobile IPv6 protocol as described in RFC 3775 is not IP version agnostic, i.e., HA, MN, and CN as well as the networks they are connected to must support IPv6. And running Mobile IPv4 and Mobile IPv6 simultaneously on every host does not support session continuity when the MN moves from a lPv4-only network in an lPv6-only network or vice versa. Furthermore, this would not be efficient in terms of signalling traffic [G. Tsirtsis, H. Soliman, "Mobility management for Dual stack mobile nodes: A Problem Statement", draft-ietf-mip6-dsmip-problem-02.txt, June 2006]. Hence, extensions for Mobile IPv6 are under development to support session continuity and IP reachability using Mobile IPv6 signaling messages even if the Mobile Node moves in an IPv4 network [H. Soliman, G. Tsirtsis, V. Devarapalli, J. Kempf, H. Levkowetz, P. Thubert, R. Wakikawa, "Mobile IPv6 support for dual stack Hosts and Routers (DSMIPv6)", draft-ietf-mip6-nemo-v4traversal-01.txt, March 2006]. This extension is from now on called "Dual Stack Mobile IP (DSMIP)".

The draft specifies how a dual stack MN can register IPv4 home and/or care-of addresses with a dual stack Mobile IPv6 HA using Mobile IPv6 signalling. Further, it describes how IPv4 or IPv6 packets can be transported between MN and HA using IPv6-in-lPv4 encapsulation. It is also described how to detect and handle NAT (Network Address Translator) routers that are located between MN and HA.

However, route optimization is not possible in some scenarios, even though route optimization is a very important feature for delay-sensitive services. This invention describes a system and method to support Mobile IP route optimization in certain IP version transition scenarios without changing the CN operation and implementation.

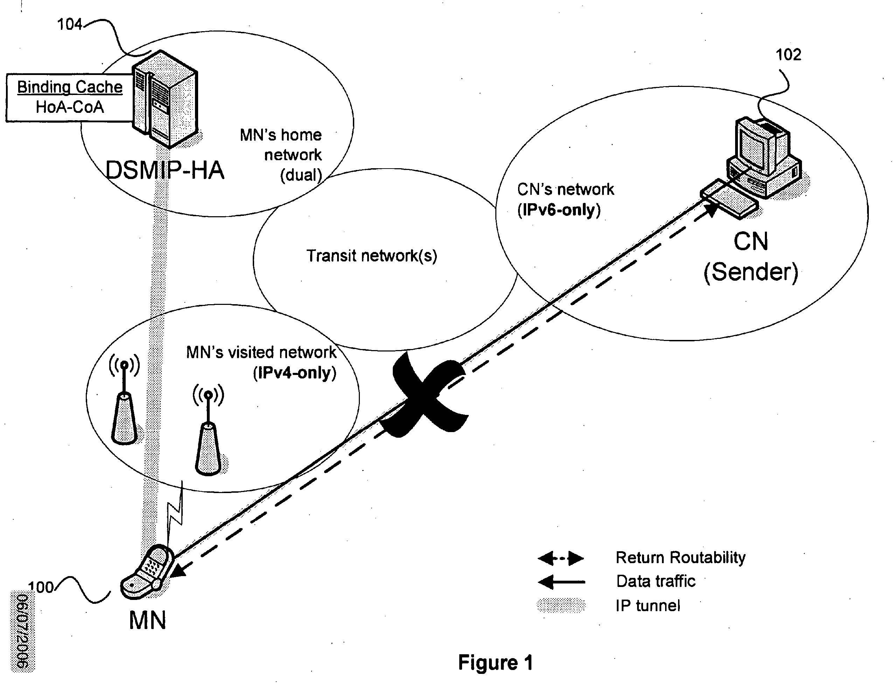

More specifically, end-to-end communication between MN and CN is not possible, if both nodes or the networks to which those nodes are connected do not understand the same IP version. However, Mobile IPv6 route optimization requires end-to-end signalling between MN and CN. For instance, if a dual stack MN is in an IPv4-only network and a dual stack CN in an lPv6-only network, end-to-end communication between MN and CN is not possible. The reason is that no matter which IP version MN and CN choose, one of the networks (more specifically, the routing infrastructures in the networks) does not support the IP version (see Figure 1). If the CN network is dual, end-to-end communication is possible, but not with standard Mobile IPv6 (RFC 3775) or DSMIP (draft-ietf-mip6-nemo-v4traversal-01.txt) behaviour, i.e., only when CN operation were to be extended.

Additional changes are needed if MN is behind a NAT. In this case, the CN must be able to detect the NAT router on the path and inform the MN to encapsulate all signalling messages into UDP (User Datagram Protocol). In such scenarios, the current solution is to reverse tunnel to a dual stack HA, which can lead to high data packet delays and bad user experience when the MN is far away from its home network.

In US20050083969 a method is described that enables a MN located in a IPv6 network to communication with a CN in an IPv4 network using Mobile IPv6 route optimization mode. The idea is to utilize a NAT-PT (RFC2766) box located at the edge of the network, which intercepts return routability packets, BU (Binding Update) messages and data packets. It converts IP headers from IPv6 to IPv4 and acts as agent for the CN with respect to the return routability procedure, i.e., from MN perspective, the NAT-PT behaves like an IPv6 CN. Therefore, the NAT-PT stores binding and keying information and replies to HoTi, CoTi and BU messages.

Drawbacks of this approach are that a special NAT-PT box must always exist at the edge of each access network and that such box must always be located on the end-to-end path between MN and CN. However, this cannot always be guaranteed. Furthermore, the box must be extended to support return routability signalling. Finally, protocol translation has quite a lot of limitations. First, the translation (incl. calculation of checksums etc) consumes processing power. Second, topology limitations exist, as stated above. Third, the translation itself has limitations, since the semantics of some fields in IPv4 and IPv6 headers are quite different. Forth, IP addresses carried in higher layers are not translated without additional application gateway functionality and end-to-end security cannot be established. For all these reason, the NAT-PT specification recommends to only use NAT-PT if no other means of communication such as IPv6 over IPv4 tunnelling is possible.

Rong Zheng et. al: "A case for mobility support with temporary home agents" Computer Communications and Networks, 2001. Proceedings. 10th International Conference on 15-17 October 2001, Piscataway, NJ, USA, 15 October 2001, pages 226-233, relates to a case for Mobility Support with Temporary Home Agents. It is proposed to use Temporary Home Agents (TA) to address the problems of triangular routing and prolonged hand off latency. TA exploits the locality of user movement by dynamically selecting a mobile IP based HA based on the location of the user. The TA allocates a home address MH which the MH may use as its source address to shorten the distance between a MH and its home agent. The TA is located at the gateway to a foreign domain. Each domain has only one TA which is responsible for intercepting packets destined to an MH in the domain and tunneling them to the MH. Each TA maintains in its domain a pool of globally unique IP addresses. Each address binding recorded by a TA is associated with a timer. As the timer expires the corresponding address binding is deleted. Alternatively, an MH may explicitly deregister if all its connections that use the temporary home address are terminated.

### Summary of the invention

The present invention has been made in consideration of the above situation and has as its object to provide optimised routing of data in an IPv4 traversal scenario.

This object is solved by the subject matter of the independent claims. Advantageous embodiments of the invention are subject matters to the dependent claims.

To achieve this object the present invention provides a method, apparatus, system and computer-readable medium for routing packets in a system of packet-switched networks using different internet protocol versions comprising a plurality of home agents, at least one mobile node and at least one correspondent node. A first mobile node is configured with at least one topologically correct internet protocol address of a first internet protocol version and is located in a network supporting at least routing of packets with a header of the first internet protocol version. A communication is requested with a first correspondent node being configured with at least an internet protocol address of a second internet protocol version and being located in a network supporting at least the routing of packets having a header of the second internet protocol version, by an application on the first mobile node. A first of the plurality of home agents is located in proximity to a direct path between the first mobile node and the first correspondent node, the first home agent being located in a network supporting at least the routing of packets to the first mobile node with the packets having a header of the first internet protocol version and the routing of packets to the first correspondent node with the packets having a header of the second internet protocol version. Bootstrapping is carried out with the first home agent to obtain a first home address of the second internet protocol version and other communication parameters. The first mobile node's location is registered with the first home agent by sending a first binding update message comprising a first mobile node's topologically correct address of the first internet protocol version as care-of address and the first home address as home address; and the first home agent is used in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

In an advantageous embodiment the step of bootstrapping with the first home agent is carried out by the first mobile node or by a proxy node on behalf of the first mobile node.

In a further embodiment the step of registering the first mobile node's location with the first home agent is carried out by the first mobile node or by a proxy node on behalf of the first mobile node.

According to another advantageous embodiment of the invention the step of locating the first of the plurality of home agents is carried out by the first mobile node or by a proxy node on behalf of the first mobile node.

It is an advantage that the first home agent is situated closer to the first correspondent node than to the first mobile node.

In an advantageous embodiment of the invention the step of locating the first of the plurality of home agents comprises querying a domain name server for a home agent address, the domain name being constructed from at least the first correspondent node's domain name and a string that indicates that a home agent supporting the routing of packets having the header of the first internet protocol version and packets having the header of the second internet protocol version is required, to find an address of the first home agent.

In a further advantageous embodiment the step of locating the first of the plurality of home agents comprises the steps of setting a flag in a first request message to indicate that a home agent supporting the routing of packets having the header of the first internet protocol version and packets having the header of the second internet protocol version is required; setting the destination address in the internet protocol header of the first request message to an anycast address constructed from at least the first correspondent node's address prefix; setting the source address in the internet protocol header of the first request message to the home address corresponding to the second home agent; reverse tunnelling the first request message to a second of the plurality of home agents supporting the routing of packets having the header of the first internet protocol version and packets having the header of the second internet protocol version, the first mobile node being registered with the second home agent and the second home agent located anywhere in system of packet-switched networks; and replying by one of the plurality of home agents to the request with an address of the first home agent.

A further embodiment of the invention has the step of locating (404) the first of the plurality of home agents comprising the steps of sending a request containing information about the first correspondent node and an indication that a home agent supporting the routing of packets having the header of the first internet protocol version and packets having the header of the second internet protocol version is required to a dedicated network entity; and receiving a reply from the dedicated network entity with an address of the first home agent.

Another advantageous embodiment of the invention comprises the following steps carried out by the dedicated network entity: mapping an address of the first correspondent node to an address of one of a plurality of home agents supporting the routing of packets having the header of the first internet protocol version and packets having the header of the second internet protocol version and located close to the first correspondent node.

It is an advantage that the mapping is pre-configured or dynamically discovered.

In a further embodiment of the invention the step of locating the first of the plurality of home agents comprises the steps of: setting a flag in a first dynamic host configuration protocol request message to indicate that a home agent supporting the routing of packets having the header of the first internet protocol version and packets having the header of the second internet protocol version is required; sending the first dynamic host configuration protocol request message to locate the first home agent; sending by a dynamic host configuration protocol server a dynamic host configuration protocol reply containing an address of the first home agent; wherein, if the first home agent is in a different network to the first mobile node the first dynamic host configuration protocol message sent by the first mobile node contains the address of the first correspondent node

According to another embodiment of the invention the first home agent is re-used in a subsequent communication sessions with the same or other correspondent nodes in the same or a nearby domain by skipping the locating and the bootstrapping steps.

In a further advantageous embodiment of the invention a method for routing packets in a system of packet-switched networks using different internet protocol versions comprising a plurality of home agents, at least one mobile node and at least one correspondent node is described. A first mobile node is configured with at least one topologically correct internet protocol address of a first internet protocol version and a first home address of a second internet protocol version and is located in a network supporting at least routing of packets having a header of the first internet protocol version. An application on a first correspondent node being configured with at least an internet protocol address of a second internet protocol version and being located in a network supporting at least the routing of packets having a header of the second internet protocol version starts a communication session with the first mobile node by sending data packets having a header of the second internet protocol version to the first mobile node's first home address, the first home address and a first of mobile node's topologically correct addresses being registered at a first home agent. The mobile node receives first data packets from the first correspondent node tunnelled over the first home agent. A second of the plurality of home agents is located in proximity to a direct path between the first mobile node and the first correspondent node, the second home agent being located in a network supporting at least the routing of packets to the first mobile node with the packets having a header of the first internet protocol version and the routing of packets to the first correspondent node with the packets having a header of the second internet protocol version. Bootstrapping is carried out with the second home agent to obtain a second home address of the second internet protocol version and other communication parameters. The first mobile node's location is registered with the second home agent by sending a first binding update comprising the first mobile node's topologically correct address of the first internet protocol version as care-of address and the second home address as home address. A first care-of-test init message is sent to the first correspondent node over a bi-directional tunnel to the second home agent, the outer header of the tunnelled packets using the first internet protocol version and the inner header of the tunnelled packets using the second internet protocol version, with a source address in the internet protocol header of the first care-of-test init message set to the second home address. A care-of-test message is received from the first correspondent node over the bi-directional tunnel to the second home agent. The first mobile node's location is registered with the first correspondent node by sending a second binding update message comprising the second home address as care-of address and the first home address as home address, the second binding update message sent over the bi-directional tunnel to the second home agent, the outer header of the tunnelled packets using the first internet protocol version and the inner header of the tunnelled packets using the second internet protocol version; and the route optimization mode is used over the bi-directional tunnel to the second home agent, the outer header of the tunnelled packets using the first internet protocol version and the inner header of the tunnelled packets using the second internet protocol version, for communication between the first mobile node and the first correspondent node with the communication parameters set up in the bootstrapping step by sending data packets destined for the first correspondent node by the first mobile node over the bi-directional tunnel to the second home agent, the data packets in the tunnel comprising the first home address in a home address option, the second home address as source address in the internet protocol header and the first correspondent node's address as destination address in the internet protocol header.

In a further advantageous embodiment the first binding update message is encapsulated in a user datagram protocol message when a network address translation router is on the path to support network address translation traversal.

According to another embodiment of the invention the first binding update message is encapsulated in a message of the first internet protocol version.

In another advantageous embodiment the first home agent detects a network address translation router on the direct path and informs the first mobile node of this.

It is an advantage of the present invention that the first internet protocol version is IPv4 and the second internet protocol version is IPv6 or IPv4.

In another embodiment of the invention the method steps are triggered if the network of the first mobile node and the network of the first correspondent node do not support the same internet protocol version.

In a further advantageous embodiment the steps are triggered if the first mobile node runs an application that requires short packet delays.

Another advantageous embodiment of the present invention concerns a mobile node in a system of packet-switched networks using different internet protocol versions comprising a plurality of home agents and at least one correspondent node. The mobile node is configured with at least one topologically correct internet protocol address of a first internet protocol version and is located in a network supporting at least routing of packets having a header of the first internet protocol version. The mobile node comprises: an application adapted to request communication with a first correspondent node being configured with at least an internet protocol address of a second internet protocol version and being located in a network supporting at least the routing of packets having a header of the second internet protocol version; locating means to locate a first of the plurality of home agents in proximity to a direct path between the mobile node and the first correspondent node, the first home agent being located in a network supporting at least the routing of packets to the mobile node with the packets having a header of the first internet protocol version and the routing of packets to the first correspondent node with the packets having a header of the second internet protocol version; bootstrapping means adapted to bootstrap with the first home agent to obtain a first home address of the second internet protocol version and other communication parameters; transmission means adapted to send a first binding update message comprising the mobile node's topologically correct address of the first internet protocol version as care-of address and the first home address as home address; and communication means adapted to use the first home agent in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

According to a further advantageous embodiment a system of packet-switched networks using different internet protocol versions comprising a plurality of home agents, at least one mobile node and at least one correspondent node, a first mobile node being configured with at least one topologically correct internet protocol address of a first internet protocol version and being located in a network supporting at least routing of packets having a header of the first internet protocol version. The system comprises: an application on the first mobile node adapted to request communication with a first correspondent node being configured with at least an internet protocol address of a second internet protocol version and being located in a network supporting at least the routing of packets having a header of the second internet protocol version; locating means to locate a first of the plurality of home agents in proximity to a direct path between the first mobile node and the first correspondent node, the first home agent being located in a network supporting at least the routing of packets to the first mobile node with the packets having a header of the first internet protocol version and the routing of packets to the first correspondent node with the packets having a header of the second internet protocol version; bootstrapping means adapted to bootstrap with the first home agent to obtain a first home address of the second internet protocol version and other communication parameters; registration means adapted to register the first mobile node's location with the first home agent by sending a first binding update message comprising the mobile node's topologically correct address of the first internet protocol version as care-of address and the first home address as home address; and wherein the first home agent is adapted to be used in a bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

According to another embodiment of the invention a computer readable medium stores instructions that, when executed by a processor of a mobile node in a system of packet-switched networks using different internet protocol versions comprising a plurality of home agents and at least one correspondent node, the mobile node being configured with at least one topologically correct internet protocol address of a first internet protocol version and being located in a network supporting at least routing of packets having a header of the first internet protocol version cause the mobile node to carry out the following steps: requesting communication with a first correspondent node being configured with at least an internet protocol address of a second internet protocol version and being located in a network supporting at least the routing of packets having a header of the second internet protocol version, by an application on the first mobile node, locating a first of the plurality of home agents in proximity to a direct path between the mobile node and the first correspondent node, the first home agent being located in a network supporting at least the routing of packets to the mobile node with the packets having a header of the first internet protocol version and the routing of packets to the first correspondent node with the packets having a header of the second internet protocol version; bootstrapping with the first home agent to obtain a first home address of the second internet protocol version and other communication parameters; sending a first binding update message comprising a first mobile node's topologically correct address of the first internet protocol version as care-of address and the first home address as home address; and using the first home agent in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

### Brief Description of the Figures

Further features and advantages will become apparent from the following and more particular description of the various embodiments of the invention as illustrated in the accompanying drawings, wherein:
Figure 1 shows a prior art IP version transition scenario in which end-to-end communication between MN and CN is not possible;
Figure 2 depicts data path and addresses in IP headers for IPv4 traversal in the MN-initiated cases;
Figure 3 shows data path and addresses in IP headers for IPv4 traversal in the CN-initiated case;
Figure 4 is a flow chart fro the MN initiated case; and
Figure 5 is a flow chart for the CN initiated case.

### Detailed Description of the Invention

The following paragraphs will describe various embodiments of the invention including the procedure to solve the given problem, described for MN-initiated and CN-initiated sessions, respectively.
For exemplary purposes only, most of the embodiments are outlined in relation to a communication system with both IPv4 and IPv6 networks, and the terminology used in the subsequent sections mainly relates to the IPv4 and IPv6 terminology. However, the used terminology and the description of the embodiments with respect to a IPv4 and IPv6 architecture is not intended to limit the principles and ideas of the inventions to such systems.

Also, the detailed explanations given in the technical background section above are merely intended to better understand the mostly IPv4 and IPv6 specific exemplary embodiments described in the following, and should not be understood as limiting the invention to the described specific implementations of processors and functions in an IPv4 or IPv6 network.

The invention is based on the DSMIP protocol. The first key idea of this invention is to discover and bootstrap with a DSMIP-capable HA, which is located close to the direct path between MN and CN, and use this HA in bi-directional tunnelling mode with IPv4 encapsulation when communicating with the corresponding CN for providing optimized routing. In the MN-initiated scenario, this already solves the problem of simultaneous IPv4 traversal and optimized routing.

In the more challenging CN-initiated scenario this is not enough, since the MN usually does not know in advance that a CN will start sending data to the MN and which CN will do so. To solve the problem in this scenario, the main idea is to permanently keep one HA and the corresponding HoA for reachability (i.e., being able to receive packets from CNs) and bootstrap with a second DSMIP-capable HA to achieve optimized routing with a specific CN. In order to move the Mobile IP data session from the first HA to the second HA, the MN executes the route optimization mode over the bi-directional tunnel with IPv4 encapsulation to the second HA and the CoA in route optimization mode is set to the second HoA. Using route optimization mode over bi-directional tunnelling and using a HoA (corresponding to the reverse tunnel to the second HA) as CoA in CoT/CoTi/BU messages to CN is considered to be the second key idea of this invention. Since the DSMIP solution is re-used, NAT detection and handling is supported as well.

The invention is described separately for the case that the MN and the CN initiates the communication session, respectively. Note that it is assumed that the MN decides to use optimized routing for a specific session before initiating that session. If the MN decides to optimize an existing session, the procedures described for the CN-initiated case apply.

The assumed scenario is that a dual stack MN has moved in an IPv4-only network and an IPv6-only or dual stack CN is located in a IPv6-only or dual stack or IPv4-only network. The HA is DSMIP-capable and as such dual stacked and located in a dual stack network.

The problem this invention solves is to support optimized routing in such IPv4 traversal scenarios. Optimized routing shall be supported in both cases MN- and CN-initiated communication sessions.

The invention described in the following does not use protocol translation and hence can avoid the issues listed above.

### MN-initiated communication sessions

If the MN initiates the communication with the CN and decides to use optimized routing with this CN, it is free to choose a HA and a corresponding HoA for the communication with the CN, if it is already registered with multiple HAs and has multiple HoAs (either IPv4 or IPv6) configured. The idea in providing optimized routing is to discover and bootstrap with a DSMIP-capable HA which is located close to the direct path between MN and CN and use this HA in bi-directional tunnelling mode for IPv4 traversal to the CN. Since such a HA is primarily used for optimized routing with a specific CN, we call it "Route Optimization" (RO)-HA. The corresponding HoA as well as the CN address can either be an IPv4 or an IPv6 address, whereas the CoA is an IPv4 address.

Bootstrapping is done as described in G. Giaretta, J. Kempf and V. Devarapalli ("Mobile IPv6 bootstrapping in split scenario", draft-ietf-mip6-bootstrapping-split-02.txt, March 2006) as summarized above, maybe extended by IPv4 encapsulation of signalling messages to support IPv4 traversal. The MN may be registered with one or more HAs before bootstrapping with the RO-HA.

One way to discover a RO-HA would be to use location-dependent HA discovery as mentioned in G. Giaretta, J. Kempf and V. Devarapalli ("Mobile IPv6 bootstrapping in split scenario", draft-ietf-mip6-bootstrapping-split-02.txt, March 2006). E.g., if the CN's host name is "cn.eu.panasonic.com", the MN may query DNS for "ha_dsmip6.eu.panasonic.com" or "_dsmip6._ipv6.eu.panasonic.com" to obtain a RO-HA address, in this case an address of a DSMIP-capable HA that is located in the same domain as the CN.

A second way to discover a RO-HA address is to use anycast-based HA discovery such as "Dynamic Home Agent Address Discovery (DHAAD)" as specified in RC3775. The MN would therefore send a request to an anycast address, which it constructs based on the CN's address prefix and a HA in CN's network would reply to this requests. An additional flag can indicate that a DSMIP-capable HA is required. However, a problem is that anycast is not supported in IPv4 networks. Hence, the MN would reverse tunnel the anycast message to one of its DSMIP-HAs using IPv4 encapsulation, if the MN is located in a IPv4 network. It would then use the corresponding HoA as source address.

A third way is to introduce a dedicated network entity (server) that is able to map a CN address to one or more addresses of DSMIP-HAs which are located close to the path between MN and CN. These mappings can be pre-configured by the network operator or dynamically discovered, e.g., with the mechanisms described above. The MN would then send a request to this network entity and receive a reply with the RO-HA address.

A fourth way to discover the RO-HA would be to get this information from DHCP servers similar to the method described in (K. Chowdhury, A. Yegin, "MIP6-bootstrapping via DHCPv6 for the Integrated Scenario", draft-ietf-mip6-bootstrapping-integrated-dhc-01.txt, Jun 2006) and (H. J. Jang, A. Yegin, J, Choi, K. Chowdhury, "DHCP Option for Home Information Discovery in MIPv6", draft-jang-mip6-hiopt-00.txt, June 2006), but extended by the information (e.g., flag) that a DSMIP-capable HA is required. The RO-HA can be local to the MN or further away from the MN. For the former case, no further extensions to DHCP messages are necessary. For the latter case, DHCP messages sent by the MN may contain the CN address in a new option and the DHCP server replies with an address of a HA located close to the path between MN and CN. The reply can be any DHCP message with a new option.

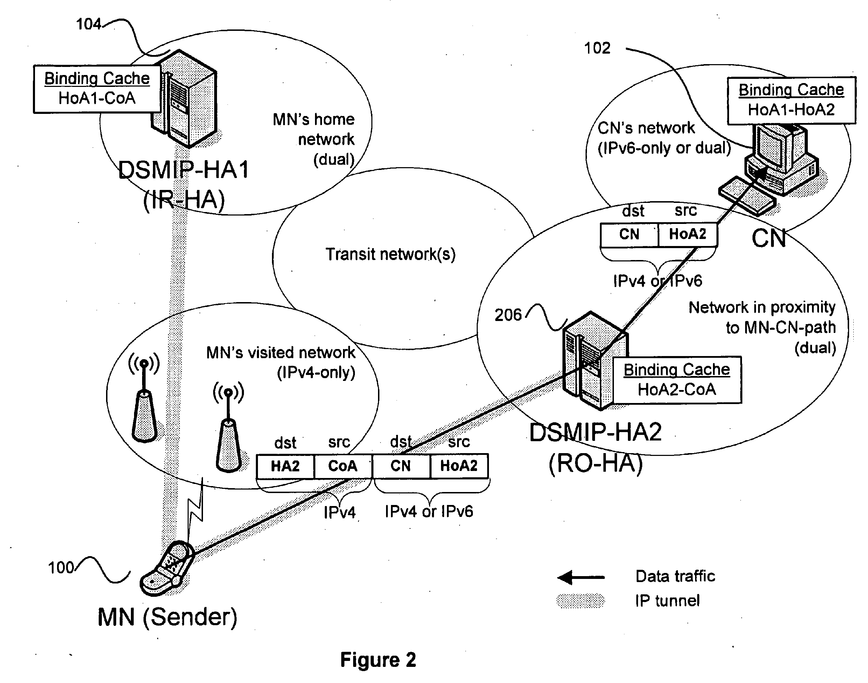

Figure 2 shows an example with data path and addresses in IP headers. The MN 100 was registered with HA1 104 and was configured with HoA1 before initiating communication with CN 102. After an application requests a communication session with CN 102, the MN 100 discovers and bootstraps with the RO- HA "HA2" 206, configures a corresponding HoA ("RO-HoA" or "HoA2") and uses it for communication with CN 102 in bi-directional tunnelling mode. Therefore, the MN 100 tunnels data packets to HA2 206 using IPv4 encapsulation, which decapsulates and sends them to CN 102. The data packets can be either IPv4 or IPv6.

When CN 102 replies, it sends packets to MN's RO-HoA (HoA2) 206, which are routed to RO-HA (HA2) 206 and tunnelled to MN 100 using IPv4 encapsulation. HoA1 104 is not used in this communication session.

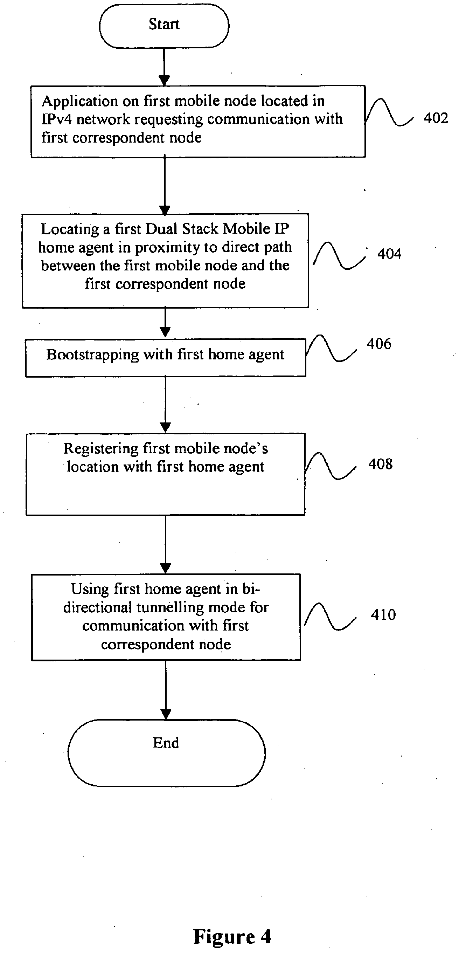

Figure 4 describes the MN initiated method in form of a flow chart. In step 402 communication is requested. The mobile node, which is located in an IPv4 network, then locates a first dual-stack HA in proximity to the direct path between itself and the first CN, which can be located in an IPv6 network, in step 404. To do this the methods described above or other methods using a distance metric, such as Quality of Service (QoS), the number of hops and/or packet delays can be used. In step 406 the MN bootstraps with the HA. This includes that the IPsec security association is set up and the HoA is assigned before authentication and authorization with Mobility Service Authoriser (MSA) is carried out. In step 408 the MN's location is registered with the first home agent, which is then used in bi-directional tunnelling mode for communication with the CN in step 410.

For subsequent sessions with the same CN or with other CNs in this network or in nearby networks, the tunnel to the RO-HA can be re-used. Upon movement, the MN sends BU messages to HA1 as well as HA2.

### CN-initiated communication sessions

An active MN which is not at home is registered with at least one HA. The MN's HoA corresponding to this HA must be known by a CN to be reachable by this CN. This can, e.g., be achieved by publishing the HoA in DNS (Domain Name Server). Since such HAs are mainly used by the MN to be reachable, they are from now on called IP-Reachability (IR)-HAs. In the CN-intiated case, the CN selects one of MN's IR-HoAs (i.e., HoAs belonging to one of the MN's IR-HAs), e.g., by querying DNS with the MN's host name, to contact the MN. The corresponding IR-HA may not provide a short route. Hence, the MN may decide to optimize the route, but it can only do so when the session is already active.

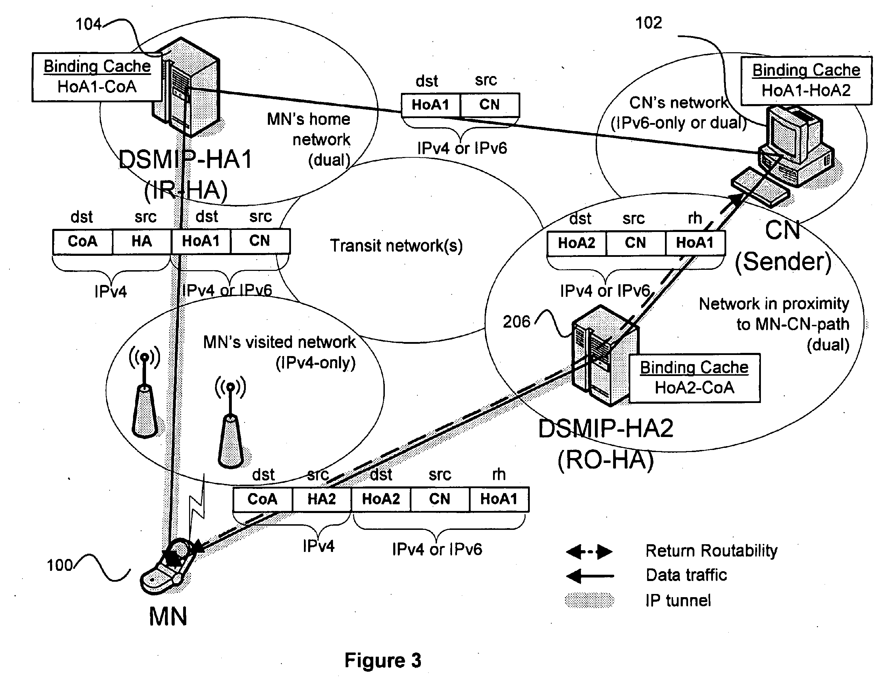

After first data packets (either IPv4 or IPv6) from a CN are received by MN 100 over the IR-HA 104 (Figure 3), the MN 100 may decide to optimize the route (e.g., depending on the distance to the IR-HA 104 from which the packets were received). Therefore, the MN 100 discovers and bootstraps with a DMSIP-HA 206, which is preferably located close to the direct path between MN 100 and CN 102. This HA is again a RO-HA as defined in the MN-initiated case (HA2 in Figure 3). Note that the RO-HA 206 should rather be located close to CN 102 than to MN 100 if the MN's mobility is very high in order to prevent frequent bootstrapping.

After bootstrapping, the MN 100 registers with the RO-HA and starts the return routability procedure with the CN over the (IPv4-based) reverse tunnel to the RO-HA 206. The MN uses the IR-HoA (HoA1) as HoA and the RO-HoA (HoA2) as CoA in CoTi and BU messages and sends those messages (with IPv6 headers) to the CN 102 over the (IPv4-based) reverse tunnel to RO-HA 206. BU messages sent to HAs still contain the "real" CoA. Hence, data packets sent by CN 102 are routed to RO-HA 206 using the type 2 routing header and tunnelled to the MN 100 including the routing header. Hence, from CN's point of view the MN 100 is located in the network of RO-HA 206. Consequently, the route is now optimized without breaking the session and IPv4 traversal is provided. Since neither HAs nor CNs have to be modified, the solution is easy to deploy and no transition issues arise.

The MN's HoAs as well as the CN address can either be an IPv4 or an IPv6 address, whereas the "real" MN's CoA is an IPv4 address. To include IPv4 HoAs in routing header or HoA option, they can be represented as lPv4-mapped or lPv4-compatible IPv6 addresses (see RFC3513)

Figure 3 shows the path and addresses in case the MN sends data packets over the reverse tunnel to the RO-HA (HA2) 206. The packets contain the IR-HoA (HoA1) in the HoA option and RO-HoA (HoA2) 206 as source address in the inner IP header. Note that this is different from RFC3775, which prescribes that the CoA is used as source address in route optimization mode.

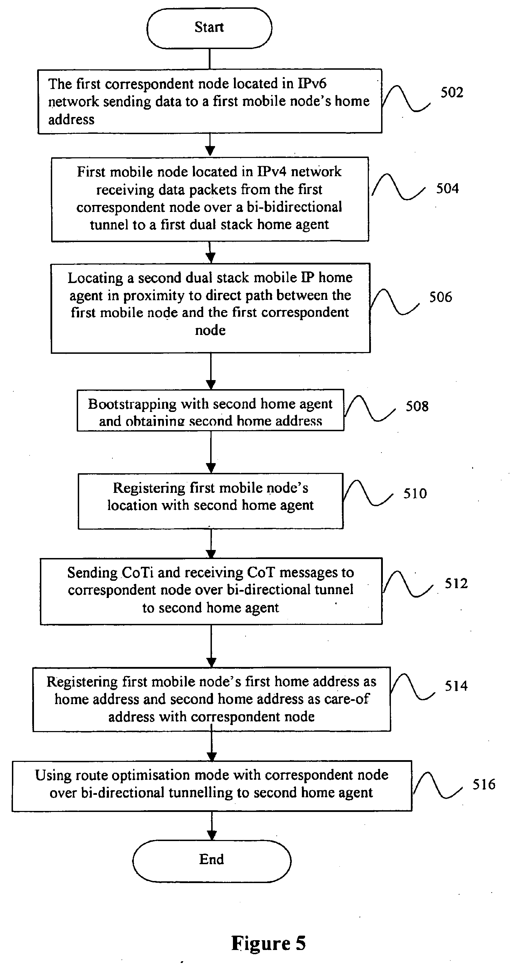

Figure 5 is a flow chart depicting the CN initiated case. After communication is requested in step 502 the MN, which is located in an IPv4 network, receives data packets from the first CN in step 504. A second dual stack HA in proximity to the direct path between the first MN and first CN is located in step 506 and bootstrapping with the second HA is carried out in step 508. In step 510 the first MN's location is registered with the second HA and CoT and CoTi messages are sent to the correspondent node over the bi-directional tunnel to the second home agent in step 512. A home address belonging to the second HA's network is registered as first MN's location with the CN in step 514, and in step 516 route optimization mode is used with the MN's second HoA as CoA.

For subsequent sessions with the same CN or with other CNs in this network or in nearby networks, the tunnel to the RO-HA (HA2) can be re-used. Upon movement, the MN sends BU messages to the IR-HA as well as the RO-HA. However, it does not send a BU message to the CN, as it would usually do in route optimization mode according to RFC3775. Instead, it only sends a BU to CN if it changes the bi-directional tunnel underlying the route optimization mode from RO-HA to another RO-HA (and periodically to prevent the binding lifetime to expire).

Besides the benefit of enabling optimized routing in IP version transition scenarios, the invention also allows the optimized routing of IPv4 traffic. Although this is not directly related to IP version transition, it is something that is not supported by Mobile IPv4. Since the invention does neither require any changes to HA or CN operation nor to any signalling message formats, the invention is very easy to deploy and no transition issues arise during deployment.

Although this invention is described with respect to a packet-switched system running the IPv4 and IPv6 protocols, the invention is not limited to these protocols. Instead, it is applicable to systems running any mobility management protocol, which support both routing of data packets through a mobility anchor and routing of data packets without passing through the anchor.

Instead of running on the mobile node, the mobility management protocol can also run on a proxy node without loss of applicability of this invention. In this case, the proxy node executes all necessary actions described in this document including sending location updates to the network on behalf of the mobile node. Examples of such protocols are any kinds of Proxy Mobile (e.g., [K. Chowdhury, "Network Based Layer 3 Connectivity and Mobility Management for IPv4", draft-chowdhury-netmip4-00.txt, February 2006] or [K. Chowdhury, A. Singh, "Network Based Layer 3 Connectivity and Mobility Management for IPv6", draft-chowdhury-netmip6-00.txt, February 2006]) or protocols proposed and developed in the netlmm WG (e.g., [J. Wood, K. Nishida, "Edge Mobility Protocol (EMP)", draft-wood-netlmm-emp-base-00.txt, October 2005]).

Another embodiment of the invention relates to the implementation of the above described various embodiments using hardware and software. It is recognised that the various methods mentioned above, as well as the various logical blocks and modules described above may be implemented where performed using computing devices (processors), as for example general purpose processors, Application Specific Integrated Circuits (ASIC), Field Programmable Gate Arrays (FPGA) or other programmable logic devices, etc. The various embodiments of the invention may also be performed or embodied by a combination of these devices.

Further the various embodiments of the invention may also be implemented by means of software modules which are executed by a processors or directly in hardware. Also, a combination of software modules and a hardware implementation may be possible. The software modules may be stored in any kind of computer-readable storage medium, for example RA;, EPROM, EEPROM, flash memory, registers, hard disks, CD-ROM, DVD, etc.

## Claims

1. A method for routing packets in a system of packet-switched networks using different internet protocol versions comprising a plurality of home agents, at least one mobile node and at least one correspondent node, a first mobile node being configured with at least one topologically correct internet protocol address of a first internet protocol version and being located in a network supporting at least routing of packets having a header of the first internet protocol version, the method comprising the steps of:
requesting (402) communication with a first correspondent node being configured with at least an internet protocol address of a second internet protocol version and being located in a network supporting at least the routing of packets having a header of the second internet protocol version, by an application on the first mobile node,
locating (404) a first of the plurality of home agents in proximity to a direct path between the first mobile node and the first correspondent node, the first home agent being located in a network supporting at least the routing of packets to the first mobile node with the packets having a header of the first internet protocol version and the routing of packets to the first correspondent node with the packets having a header of the second internet protocol version;
bootstrapping (406) with the first home agent to obtain a first home address of the second internet protocol version and other communication parameters;
registering (408) the first mobile node's location with the first home agent by sending a first binding update message comprising a first mobile node's topologically correct address of the first internet protocol version as care-of address and the first home address as home address; and
using (410) the first home agent in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

2. The method according to claim 1, wherein the step of bootstrapping (406) with the first home agent is carried out by the first mobile node or by a proxy node on behalf of the first mobile node.

3. The method according to claim 1 or 2, wherein the step of registering (408) the first mobile node's location with the first home agent is carried out by the first mobile node or by a proxy node on behalf of the first mobile node.

4. The method according to any of claims 1 to 3, wherein the step of locating (404) the first of the plurality of home agents is carried out by the first mobile node or by a proxy node on behalf of the first mobile node.

5. The method according to any of claims 1 to 4 wherein the first home agent is situated closer to the first correspondent node than to the first mobile node.

6. The method according to any of claims 1 to 5, wherein the step of locating (404) the first of the plurality of home agents comprises the following step:
querying a domain name server for a home agent address, the domain name being constructed from at least the first correspondent node's domain name and a string that indicates that a home agent supporting the routing of packets having the header of the first internet protocol version and packets having the header of the second internet protocol version is required, to find an address of the first home agent.

7. The method according to any of claims 1 to 5, wherein the step of locating (404) the first of the plurality of home agents comprises the steps of:
setting a flag in a first request message to indicate that a home agent supporting the routing of packets having the header of the first internet protocol version and packets having the header of the second internet protocol version is required;
setting the destination address in the internet protocol header of the first request message to an anycast address constructed from at least the first correspondent node's address prefix;
setting the source address in the internet protocol header of the first request message to the home address corresponding to the second home agent;
reverse tunnelling the first request message to a second of the plurality of home agents supporting the routing of packets having the header of the first internet protocol version and packets having the header of the second internet protocol version, the first mobile node being registered with the second home agent and the second home agent located anywhere in system of packet-switched networks; and
replying by one of the plurality of home agents to the request with an address of the first home agent.

8. The method according to any of claims 1 to 5, wherein the step of locating (404) the first of the plurality of home agents comprises the following steps:
sending a request containing information about the first correspondent node and an indication that a home agent supporting the routing of packets having the header of the first internet protocol version and packets having the header of the second internet protocol version is required to a dedicated network entity; and
receiving a reply from the dedicated network entity with an address of the first home agent.

9. The method according to claim 8, further comprising the following step carried out by the dedicated network entity:
mapping an address of the first correspondent node to an address of one of a plurality of home agents supporting the routing of packets having the header of the first internet protocol version and packets having the header of the second internet protocol version and located close to the first correspondent node.

10. The method according to claim 9, wherein the mapping is pre-configured or dynamically discovered.

11. The method according to any of claims 1 to 5, wherein the step of locating (404) the first of the plurality of home agents comprises the steps of:
setting a flag in a first dynamic host configuration protocol request message to indicate that a home agent supporting the routing of packets having the header of the first internet protocol version and packets having the header of the second internet protocol version is required;
sending the first dynamic host configuration protocol request message to locate the first home agent;
sending by a dynamic host configuration protocol server a dynamic host configuration protocol reply containing an address of the first home agent;
wherein, if the first home agent is in a different network to the first mobile node the first dynamic host configuration protocol message sent by the first mobile node contains the address of the first correspondent node

12. The method according to any of claims 1 to 11, wherein the first home agent is re-used in a subsequent communication sessions with the same or other correspondent nodes in the same or a nearby domain by skipping the locating and the bootstrapping steps.

13. A method for routing packets in a system of packet-switched networks using different internet protocol versions comprising a plurality of home agents, at least one mobile node and at least one correspondent node, a first mobile node being configured with at least one topologically correct internet protocol address of a first internet protocol version and a first home address of a second internet protocol version and being located in a network supporting at least routing of packets having a header of the first internet protocol version, the method comprising the steps of:
starting (502) by an application on a first correspondent node being configured with at least an internet protocol address of a second internet protocol version and being located in a network supporting at least the routing of packets having a header of the second internet protocol version a communication session with the first mobile node by sending data packets having a header of the second internet protocol version to the first mobile node's first home address, the first home address and a first of mobile node's topologically correct addresses being registered at a first home agent;
receiving by the mobile node (504) first data packets from the first correspondent node tunnelled over the first home agent;
locating (506) a second of the plurality of home agents in proximity to a direct path between the first mobile node and the first correspondent node, the second home agent being located in a network supporting at least the routing of packets to the first mobile node with the packets having a header of the first internet protocol version and the routing of packets to the first correspondent node with the packets having a header of the second internet protocol version;
bootstrapping (508) with the second home agent to obtain a second home address of the second internet protocol version and other communication parameters;
registering (510) the first mobile node's location with the second home agent by sending a first binding update comprising the first mobile node's topologically correct address of the first internet protocol version as care-of address and the second home address as home address;
sending (512) a first care-of-test init message to the first correspondent node over a bi-directional tunnel to the second home agent, the outer header of the tunnelled packets using the first internet protocol version and the inner header of the tunnelled packets using the second internet protocol version, with a source address in the internet protocol header of the first care-of-test init message set to the second home address;
receiving (512) a care-of-test message from the first correspondent node over the bi-directional tunnel to the second home agent;
registering (514) the first mobile node's location with the first correspondent node by sending a second binding update message comprising the second home address as care-of address and the first home address as home address, the second binding update message sent over the bi-directional tunnel to the second home agent, the outer header of the tunnelled packets using the first internet protocol version and the inner header of the tunnelled packets using the second internet protocol version; and
using (516) the route optimization mode over the bi-directional tunnel to the second home agent, the outer header of the tunnelled packets using the first internet protocol version and the inner header of the tunnelled packets using the second internet protocol version, for communication between the first mobile node and the first correspondent node with the communication parameters set up in the bootstrapping step by sending data packets destined for the first correspondent node by the first mobile node over the bi-directional tunnel to the second home agent, the data packets in the tunnel comprising the first home address in a home address option, the second home address as source address in the internet protocol header and the first correspondent node's address as destination address in the internet protocol header.

14. The method according to any of claims 1 to 13 wherein the first binding update message is encapsulated in a user datagram protocol message when a network address translation router is on the path to support network address translation traversal.

15. The method according to any of claims 1 to 14, wherein the first binding update message is encapsulated in a message of the first internet protocol version.

16. The method according to any of claims 1 to 15, further comprising the step of:
detecting by the first home agent a network address translation router on the direct path and informing the first mobile node of this.

17. The method according to any of claims 1 to 16, wherein the first internet protocol version is IPv4 and the second internet protocol version is IPv6.

18. The method according to any of claims 1 to 17, wherein the method is applied, if the network of the first mobile node and the network of the first correspondent node do not support the same internet protocol version-.

19. The method according to any of claims 1 to 17, wherein the method is applied, if the first mobile node runs an application that requires short packet delays.

20. The method according to any of claims 13 to 19, wherein the step of bootstrapping (508) with the second home agent is carried out by the first mobile node or by a proxy node on behalf of the first mobile node.

21. The method according to any of claims 13 to 20, wherein the step of registering (510) the first mobile node's location with the second home agent is carried out by the first mobile node or by a proxy node on behalf of the first mobile node.

22. The method according to any of claims 13 to 21, wherein the step of registering (514) the first mobile node's location with the first correspondent node is carried out by the first mobile node or by a proxy node on behalf of the first mobile node.

23. The method according to any of claims 13 to 22, wherein the steps of sending and receiving care-of test init and care-of test messages (512) to and from the first correspondent node is carried out by the first mobile node or by a proxy node on behalf of the first mobile node.

24. The method according to any of claims 13. to 23, wherein the step of locating (506) the second of the plurality of home agents is carried out by the first mobile node or by a proxy node on behalf of the first mobile node.

25. The method according to any of claims 13 to 24, wherein the second home agent is situated closer to the first correspondent node than to the first mobile node.

26. The method according to any of claims 13 to 25, wherein the step of locating (506) the second of the plurality of home agents between the first correspondent node and the first mobile node comprises the following step:
querying a domain name server for a home agent address; the domain name being constructed from at least the first correspondent node's domain name and a string that indicates that a home agent supporting the routing of packets having the header of the first internet protocol version and packets having the header of the second internet protocol version is required, to find an address of the second home agent in a same domain as the first correspondent node.

27. The method according to any of claims 13 to 26, wherein the step of locating (506) the second of the plurality of home agents comprises the steps of:
setting a flag in a first request message to indicate that a home agent supporting the routing of packets having the header of the first internet protocol version and packets having the header of the second internet protocol version is required;
setting the destination address in the internet protocol header of the first request message to an anycast address constructed from at least the first correspondent node's address prefix
setting the source address in the internet protocol header of the first request message to the home address corresponding to the second home agent;
reverse tunnelling the first request message to a second of the plurality of home agents supporting the routing of packets having the header of the first internet protocol version and packets having the header of the second internet protocol version, the first mobile node being registered with the second home agent and the second home agent located anywhere in system of packet-switched networks; and
replying by one of the plurality of home agents to the request with an address of the first home agent.

28. The method according to any of claims 13 to 26, wherein the step of locating (506) the second of the plurality of home agents comprises the following steps:
sending a request containing information about the first correspondent node and an indication that a home agent supporting the routing of packets having the header of the first internet protocol version and packets having the header of the second internet protocol version is required to a dedicated network entity; and
receiving a reply from the dedicated network entity with an address of the second home agent.

29. The method according to claim 28, further comprising the following steps carried out by the dedicated network entity:
mapping an address of the first correspondent node to an address of one of a plurality of home agents supporting the routing of packets having the header of the first internet protocol version and packets having the header of the second internet protocol version and located close to the first correspondent node.

30. The method according to claim 29, wherein the mapping is pre-configured or dynamically discovered.

31. The method according to any of claims 13 to 26, wherein the step of locating (506) the second of the plurality of home agents comprises the steps of:
setting a flag in a first dynamic host configuration protocol request message to indicate that a home agent supporting the routing of packets having the header of the first internet protocol version and packets having the header of the second internet protocol version is required;
sending the first dynamic host configuration protocol request message to locate the first home agent;
a dynamic host configuration protocol server replies with an address of the first home agent
wherein, if the first home agent is in a different network to the first mobile node the first dynamic host configuration protocol message sent by the first mobile node contains the address of the first correspondent node

32. The method according to any of claims 13 to 31, wherein the second home agent is re-used in a subsequent communication sessions with the same or other correspondent nodes in the same or a nearby domain by skipping the locating and the bootstrapping steps.

33. A mobile node (100) for a system of packet-switched networks using different internet protocol versions comprising a plurality of home agents and at least one correspondent node, the mobile node (100) being configured with at least one topologically correct internet protocol address of a first internet protocol version and being located in a network supporting at least routing of packets having a header of the first internet protocol version, the mobile node (100) comprising:
an application adapted to request communication with a first correspondent node (102) being configured with at least an internet protocol address of a second internet protocol version and being located in a network supporting at least the routing of packets having a header of the second internet protocol version;
locating means to locate a first (104) of the plurality of home agents in proximity to a direct path between the mobile node (100) and the first correspondent node (102), the first home agent (104) being located in a network supporting at least the routing of packets to the mobile node with the packets having a header of the first internet
protocol version and the routing of packets to the first correspondent node with the packets having a header of the second internet protocol version;
bootstrapping means adapted to bootstrap with the first home agent (104) to obtain a first home address of the second internet protocol version and other communication parameters;
transmission means adapted to send a first binding update message comprising the mobile node's topologically correct address of the first internet protocol version as care-of address and the first home address as home address; and
communication means adapted to use the first home agent (104) in bi-directional tunnelling mode, the outer header of the tunnelled packets using the first internet protocol version and the inner header of the tunnelled packets using the second internet protocol version, for communication with the first correspondent node (102), with the communication parameters set up in the bootstrapping step and the first home address as home address.

34. The mobile node of claim 33 adapted to carry out the method steps according to any of claims 2 to 12.

35. A system of packet-switched networks using different internet protocol versions comprising a plurality of home agents, at least one mobile node and at least one correspondent node, a first mobile node (100) being configured with at least one topologically correct internet protocol address of a first internet protocol version and being located in a network supporting at least routing of packets having a header of the first internet protocol version, the system comprising:
an application on the first mobile node (100) adapted to request communication with a first correspondent node (102) being configured with at least an internet protocol address of a second internet protocol version and being located in a network supporting at least the routing of packets having a header of the second internet protocol version;
locating means to locate a first (104) of the plurality of home agents in proximity to a direct path between the first mobile node (100) and the first correspondent node (102), the first home agent (104) being located in a network supporting at least the routing of packets to the first mobile node (100) with the packets having a header of the first internet protocol version and the routing of packets to the first correspondent node (102) with the packets having a header of the second internet protocol version;
bootstrapping means adapted to bootstrap with the first home agent (104) to obtain a first home address of the second internet protocol version and other communication parameters;
registration means adapted to register the first mobile node's location with the first home agent (104) by sending a first binding update message comprising the mobile node's topologically correct address of the first internet protocol version as care-of address and the first home address as home address; and wherein
the first home agent (104) is adapted to be used in a bi-directional tunnelling mode, the outer header of the tunnelled packets using the first internet protocol version and the inner header of the tunnelled packets using the second internet protocol version, for communication with the first correspondent node (102), with the communication parameters set up in the bootstrapping step and the first home address as home address.

36. The system according to claim 35 adapted to carry out the method steps according to any of claims 2 to 12.

37. A computer readable medium storing instructions that, when executed by a processor of a mobile node in a system of packet-switched networks using different internet protocol versions comprising a plurality of home agents and at least one correspondent node, the mobile node being configured with at least one topologically correct internet protocol address of a first internet protocol version and being located in a network supporting at least routing of packets having a header of the first internet protocol version, cause the mobile node to carry out the following steps:
requesting communication with a first correspondent node being configured with at least an internet protocol address of a second internet protocol version and being located in a network supporting at least the routing of packets having a header of the second internet protocol version, by an application on the first mobile node,
locating a first of the plurality of home agents in proximity to a direct path between the mobile node and the first correspondent node, the first home agent being located in a network supporting at least the routing of packets to the mobile node with the packets having a header of the first internet protocol version and the routing of packets to the first correspondent node with the packets having a header of the second internet protocol version;
bootstrapping with the first home agent to obtain a first home address of the second internet protocol version and other communication parameters;
sending a first binding update message comprising a first mobile node's topologically correct address of the first internet protocol version as care-of address and the first home address as home address; and
using the first home agent in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

38. The computer readable medium according to claim 37 storing instructions that, when executed by a processor of a mobile node in a system of packet-switched networks using different internet protocol versions comprising a plurality of home agents and at least one correspondent node, the mobile node being configured with at least one topologically correct internet protocol address of a first internet protocol version and being located in a network supporting at least routing of packets having a header of the first internet protocol version, cause the mobile node to carry out the method steps according to any of claims 2 to 12.

39. A mobile node (100) for a system of packet-switched networks using different internet for protocol versions comprising a plurality of home agents and at least one correspondent node, the mobile node (100) being configured with at least one topologically correct internet protocol address of a first internet protocol version and a first home address of a second internet protocol version and being located in a network supporting at least routing of packets having a header of the first internet protocol version, the mobile node comprising:
receiving means adapted to receive first data packets from a first correspondent node (102) tunnelled over a first home agent (104);
location means adapted to locate a second (206) of the plurality of home agents in proximity to a direct path between the mobile node (100) and the first correspondent node (102), the second home agent being located in a network supporting at least the routing of packets to the mobile node (100) with the packets having a header of the first internet protocol version and the routing of packets to the first correspondent node (102) with the packets having a header of the second internet protocol version;
bootstrapping means adapted to bootstrap with the second home agent (206) to obtain a second home address of the second internet protocol version and other communication parameters;
transmission means adapted to send a first binding update comprising the mobile node's topologically correct address of the first internet protocol version as care-of address and the second home address as home address;
the transmission means further being adapted to send a first care-of-test init message to the first correspondent node (102) over a bi-directional tunnel to the second home agent (206), the outer header of the tunnelled packets using the first internet protocol version and the inner header of the tunnelled packets using the second internet protocol version, with a source address in the internet protocol header of the first care-of-test init message set to the second home address; the receiving means further being adapted to receive a care-of-test message from the first correspondent node (102) over the bi-directional tunnel to the second home agent (206);
the transmission means further being adapted to send a second binding update message comprising the second home address as care-of address and the first home address as home address, the second binding update message sent over the bi-directional tunnel to the second home agent (206), the outer header of the tunnelled packets using the first internet protocol version and the inner header of the tunnelled packets using the second internet protocol version; and
communication means adapted to use the route optimization mode over the bi-directional tunnel to the second home agent (206), the outer header of the tunnelled packets using the first internet protocol version and the inner header of the tunnelled packets using the second internet protocol version, for communication between the mobile node (100) and the first correspondent node (102) with the communication parameters set up by the bootstrapping means by sending data packets destined for the first correspondent node (102) by the mobile node (100) over the bi-directional tunnel to the second home agent (206), the data packets in the tunnel comprising the first home address in a home address option, the second home address as source address in the internet protocol header and the first correspondent node's address as destination address in the internet protocol header.

40. The mobile node according to claim 39 adapted to carry out the method steps of claims 14 to 32.

41. A system of packet-switched networks using different internet protocol versions comprising a plurality of home agents, at least one mobile node and at least one correspondent node, a first mobile node (100) being configured with at least one topologically correct internet protocol address of a first internet protocol version and a first home address of a second internet protocol version and being located in a network supporting at least routing of packets having a header of the first internet protocol version, the system comprising:
an application on a first correspondent node (102) being configured with at least an internet protocol address of a second internet protocol version and being located in a network supporting at least the routing of packets having a header of the second internet protocol version a communication session with the first mobile node (100) by sending data packets having a header of the second internet protocol version to the first mobile node's first home address, the first home address and a first of mobile node's topologically correct addresses being registered at a first home agent (104);
the first mobile node (100) being adapted to receive first data packets from the first correspondent node (102) tunnelled over the first home agent (104);
location means adapted to locate a second (206) of the plurality of home agents in proximity to a direct path between the first mobile node (100) and the first correspondent node (102), the second home agent (206) being located in a network supporting at least the routing of packets to the first mobile node (100) with the packets having a header of the first internet protocol version and the routing of packets to the first correspondent node (102) with the packets having a header of the second internet protocol version;
bootstrapping means adapted to bootstrap with the second home agent (206) to obtain a second home address of the second internet protocol version and other communication parameters;
the first mobile node (100) further being adapted to:
send a first binding update comprising the first mobile node's topologically correct address of the first internet protocol version as care-of address and the second home address as home address;
send a first care-of-test init message to the first correspondent node (102) over a bi-directional tunnel to the second home agent, the outer header of the tunnelled packets using the first internet protocol version and the inner header of the tunnelled packets using the second internet protocol version, with a source address in the internet protocol header of the first care-of-test init message set to the second home address;
receive a care-of-test message from the first correspondent node (102) over the bi-directional tunnel to the second home agent;
send a second binding update message comprising the second home address as care-of address and the first home address as home address, the second binding update message sent over the bi-directional tunnel to the second home agent (206), the outer header of the tunnelled packets using the first internet protocol version and the inner header of the tunnelled packets using the second internet protocol version; and
use the route optimization mode over the bi-directional tunnel to the second home agent (206), the outer header of the tunnelled packets using the first internet protocol version and the inner header of the tunnelled packets using the second internet protocol version, for communication between the first mobile node (100) and the first correspondent node (102) with the communication parameters set up by the bootstrapping means by sending data packets destined for the first correspondent node (102) by the first mobile node (100) over the bi-directional tunnel to the second home agent (206), the data packets in the tunnel comprising the first home address in a home address option, the second home address as source address in the internet protocol header and the first correspondent node's address as destination address in the internet protocol header.

42. The system of claim 41 adapted to carry out the method steps of any of claims 14 to 33.

43. A computer readable medium storing instructions that, when executed by a processor of a mobile node in a system of packet-switched networks using different internet protocol versions comprising a plurality of home agents and at least one correspondent node, the mobile node being configured with at least one topologically correct internet protocol address of a first internet protocol version and a first home address of a second internet protocol version and being located in a network supporting at least routing of packets having a header of the first internet protocol version, cause the mobile node to carry out the following steps:
receiving first data packets from a first correspondent node tunnelled over a first home agent;
location a second of the plurality of home agents in proximity to a direct path between the mobile node and the first correspondent node, the second home agent being located in a network supporting at least the routing of packets to the mobile node with the packets having a header of the first internet protocol version and the routing of packets to the first correspondent node with the packets having a header of the second internet protocol version;
bootstrapping with the second home agent to obtain a second home address of the second internet protocol version and other communication parameters;
sending a first binding update comprising the mobile node's topologically correct address of the first internet protocol version as care-of address and the second home address as home address;
sending a first care-of-test init message to the first correspondent node over a bi-directional tunnel to the second home agent, the outer header of the tunnelled packets using the first internet protocol version and the inner header of the tunnelled packets using the second internet protocol version, with a source address in the internet protocol header of the first care-of-test init message set to the second home address;
receiving a care-of-test message from the first correspondent node over the bi-directional tunnel to the second home agent;
sending a second binding update message comprising the second home address as care-of address and the first home address as home address, the second binding update message sent over the bi-directional tunnel to the second home agent, the outer header of the tunnelled packets using the first internet protocol version and the inner header of the tunnelled packets using the second internet protocol version; and
using the route optimization mode over the bi-directional tunnel to the second home agent, the outer header of the tunnelled packets using the first internet protocol version and the inner header of the tunnelled packets using the second internet protocol version, for communication between the first mobile node and the first correspondent node with the communication parameters set up in the bootstrapping step by sending data packets destined for the first correspondent node by the first mobile node over the bi-directional tunnel to the second home agent, the data packets in the tunnel comprising the first home address in a home address option, the second home address as source address in the internet protocol header and the first correspondent node's address as destination address in the internet protocol header.

44. The computer readable medium according to claim 43 storing instructions that, when executed by a processor of a mobile node in a system of packet-switched networks using different internet protocol versions comprising a plurality of home agents and at least one correspondent node, the mobile node being configured with at least one topologically correct internet protocol address of a first internet protocol version and a first home address of a second internet protocol version and being located in a network supporting at least routing of packets having a header of the first internet protocol version, cause the mobile node to carry out the steps according to any of claims 14 to 32.

## Patentansprüche

1. Verfahren zum Routing von Paketen in einem System paketvermittelter Netzwerke, die verschiedene Internetprotokoll-Versionen verwenden und eine Vielzahl von Home Agents, wenigstens einen Mobile Node sowie wenigstens einen Correspondent Node umfassen, wobei ein erster Mobile Node mit wenigstens einer topologisch korrekten Internetprotokoll-Adresse einer ersten Internetprotokoll-Version konfiguriert ist und sich in einem Netzwerk befindet, das wenigstens Routing von Paketen mit einem Header der ersten Internetprotokoll-Version unterstützt, wobei das Verfahren die folgenden Schritte umfasst:
Anfordern (402) von Kommunikation mit einem ersten Correspondent Node, der mit wenigstens einer Internetprotokoll-Adresse einer zweiten Internetprotokoll-Version konfiguriert ist und sich in einem Netzwerk befindet, das wenigstens das Routing von Paketen mit einem Header der zweiten Internetprotokoll-Version unterstützt, durch eine Anwendung an dem ersten Mobile Node,
Lokalisieren (404) eines ersten der Vielzahl von Home Agents in der Nähe zu einem direkten Pfad zwischen dem ersten Mobile Node und dem ersten Correspondent Node, wobei sich der erste Home Agent in einem Netzwerk befindet, das wenigstens das Routing von Paketen mit einem Header der ersten Internetprotokoll-Version zu dem ersten Mobile Node und das Routing von Paketen mit einem Header der zweiten Internetprotokoll-Version zu dem ersten Correspondent Node unterstützt;
Durchführen von Bootstrapping (406) mit dem ersten Home Agent, um eine erste Home-Adresse der zweiten Internetprotokoll-Version und andere Kommunikationsparameter zu erfassen;
Registrieren (408) der Position des ersten Mobile Node bei dem ersten Home Agent durch Senden einer ersten Binding-Update-Nachricht, die eine topologisch korrekte Adresse der ersten Internetprotokoll-Version des ersten Mobile Node als Care-of-Adresse und die erste Home-Adresse als Home-Adresse umfasst; und
Verwenden (410) des ersten Home Agent in bidirektionalem Tunneling-Modus, für Kommunikation mit dem ersten Correspondent Node mit den in dem Bootstrapping-Schritt festgelegten Kommunikationsparametern und der ersten Home-Adresse als Home-Adresse, wobei der äußere Header der Tunneling unterzogenen Pakete die erste Internetprotokollversion verwendet und der innere Header der Tunneling unterzogenen Pakete die zweite Internetprotokoll-Version verwendet.

2. Verfahren nach Anspruch 1, wobei der Schritt des Bootstrapping (406) mit dem ersten Home Agent durch den ersten Mobile Node oder durch einen Proxy Node im Auftrag des ersten Mobile Node ausgeführt wird.

3. Verfahren nach Anspruch 1 oder 2, wobei der Schritt des Registrierens (408) der Position des ersten Mobile Node bei dem ersten Home Agent durch den ersten Mobile Node oder durch einen Proxy Node im Auftrag des ersten Mobile Node ausgeführt wird.

4. Verfahren nach einem der Ansprüche 1 bis 3, wobei der Schritt des Lokalisierens (404) des ersten der Vielzahl von Home Agents durch den ersten Mobile Node oder durch einen Proxy Node im Auftrag des ersten Mobile Node ausgeführt wird.

5. Verfahren nach einem der Ansprüche 1 bis 4, wobei sich der erste Home Agent näher an dem ersten Correspondent Node befindet als an dem ersten Mobile Node.

6. Verfahren nach einem der Ansprüche 1 bis 5, wobei der Schritt des Lokalisierens (404) des ersten der Vielzahl von Home Agents den folgenden Schritt umfasst:
Abfragen eines Domain-Namen-Servers nach einer Home-Agent-Adresse, wobei der Domain-Name wenigstens aus dem Domain-Namen des ersten Correspondent Node und einer Zeichenfolge aufgebaut ist, die anzeigt, dass eine Home Agent erforderlich ist, der das Routing von Paketen mit dem Header der ersten Internetprotokoll-Version, und von Paketen mit dem Header der zweiten Internetprotokoll-Version unterstützt, um eine Adresse des ersten Home Agent zu ermitteln.

7. Verfahren nach einem der Ansprüche 1 bis 5, wobei der Schritt des Lokalisierens (404) des ersten der Vielzahl von Home Agents die folgenden Schritte umfasst:
Setzen eines Flag in einer ersten Anforderungsnachricht, um anzuzeigen, dass ein Home Agent erforderlich ist, der das Routing von Paketen mit dem Header der ersten Internetprotokoll-Version und von Paketen mit dem Header der zweiten Internetprotokoll-Version unterstützt;
Setzen der Zieladresse in dem Internetprotokoll-Header der ersten Anforderungsnachricht auf eine Anycast-Adresse, die wenigstens aus dem Präfix der Adresse des ersten Correspondent Node aufgebaut ist;
Setzen der Ursprungsadresse in dem Internetprotokoll-Header der ersten Anforderungsnachricht auf die Home-Adresse, die dem zweiten Home Agent entspricht;
Durchführen von Reverse-Tunneling der ersten Anforderungsnachricht zu einem zweiten der Vielzahl von Home Agents, der das Routing von Paketen mit Header der ersten Internetprotokoll-Version und von Paketen mit dem Header der zweiten Internetprotokoll-Version unterstützt, wobei der erste Mobile Node bei dem zweiten Home Agent registriert ist und sich der zweite Home Agent an einer beliebigen Position im System paketvermittelter Netzwerke befindet; und
Antworten auf die Anforderung mit einer Adresse des ersten Home Agents durch einen der Vielzahl von Home Agents.

8. Verfahren nach einem der Ansprüche 1 bis 5, wobei der Schritt des Lokalisierens (404) des ersten der Vielzahl von Home Agents die folgenden Schritte umfasst:
Senden einer Anforderung, die Informationen über den ersten Correspondent Node und eine Anzeige dahingehend enthält, dass ein Home Agent erforderlich ist, der das Routing von Paketen mit dem Header der ersten Internetprotokoll-Version und von Paketen mit dem Header der zweiten Internetprotokoll-Version unterstützt, zu einem dedizierten Netzwerkelement; und
Empfangen einer Antwort von dem dedizierten Netzwerkelement mit einer Adresse des ersten Home Agent.

9. Verfahren nach Anspruch 8, das des Weiteren den folgenden Schritt umfasst, der durch das dedizierte Netzwerkelement ausgeführt wird:
Zuordnen einer Adresse des ersten Correspondent Node zu einer Adresse eines einer Vielzahl von Home Agents, der das Routing von Paketen mit dem Header der ersten Internetprotokoll-Version und von Paketen mit dem Header der zweiten Internetprotokoll-Version unterstützt und der sich nahe an dem ersten Correspondent Node befindet.

10. Verfahren nach Anspruch 9, wobei die Zuordnung vorkonfiguriert ist oder dynamisch festgestellt wird.

11. Verfahren nach einem der Ansprüche 1 bis 5, wobei der Schritt des Lokalisierens (404) des ersten der Vielzahl von Home Agents die folgenden Schritte umfasst:
Setzen eines Flag in einer ersten Nachricht zum Anfordern eines dynamischen HostKonfigurations-Protokolls, um anzuzeigen, dass ein Home Agent erforderlich ist, der das Routing von Paketen mit dem ersten Internetprotokoll-Version und von Paketen mit dem Header der zweiten Internetprotokoll-Version unterstützt;
Senden der ersten Nachricht zum Anfordern des dynamischen Host-Konfigurations-Protokolls, um den ersten Home Agent zu lokalisieren;
Senden einer Antwort bezüglich des dynamischen Hostkonfigurations-Protokolls, die eine Adresse des ersten Home Agent enthält, durch einen Server für das dynamische Hostkonfigurations-Protokoll;
wobei, wenn sich der erste Home Agent in einem anderen Netzwerk befindet als der erste Mobile Node, die erste Nachricht bezüglich des dynamischen Hostkonfigurations-Protokolls, die durch den ersten Mobile Node gesendet wird, die Adresse des ersten Correspondent Node enthält.

12. Verfahren nach einem der Ansprüche 1 bis 11, wobei der erste Home Agent in einer nachfolgenden Kommunikationssitzung mit dem gleichen oder anderen Correspondent Node/s in der gleichen oder einer nahe gelegenen Domäne wiederverwendet wird, indem die Schritte des Lokalisierens und Bootstrappings ausgelassen werden.

13. Verfahren zum Routing von Paketen in einem System paketvermittelter Netzwerke, die verschiedene Internetprotokoll-Versionen verwenden und eine Vielzahl von Home Agents, wenigstens einen Mobile Node sowie wenigstens einen Correspondent Node umfassen, wobei ein erster Mobile Node mit wenigstens einer topologisch korrekten Internetprotokoll-Adresse einer ersten Internetprotokoll-Version und einer ersten Home-Adresse einer zweiten Internetprotokoll-Version konfiguriert ist und sich in einem Netzwerk befindet, das wenigstens Routing von Paketen mit einem Header der ersten Internetprotokoll-Version unterstützt, wobei das Verfahren die folgenden Schritte umfasst:
Starten (502) einer Kommunikationssitzung mit dem ersten Mobil Node durch eine Anwendung an einem ersten Correspondent Node, der mit wenigstens einer Internetprotokoll-Adresse einer zweiten Internetprotokoll-Version konfiguriert ist und sich in einem Netzwerk befindet, das wenigstens das Routing von Paketen mit einem Header der zweiten Internetprotokoll-Version unterstützt, durch das Senden von Datenpaketen mit einem Header der zweiten Internetprotokoll-Version, zu der ersten Home-Adresse des ersten Mobile Node, wobei die erste Home-Adresse und eine erste von topologisch korrekten Adressen des Mobile Node bei einem ersten Home Agent registriert sind;
Empfangen erster Datenpakete von dem ersten Correspondent Node, die über den ersten Home Agent getunnelt werden, durch den Mobile Node (504);
Lokalisieren (506) eines zweiten der Vielzahl von Home Agents in der Nähe zu einem direkten Pfad zwischen dem ersten Mobile Node und dem ersten Correspondent Node, wobei sich der zweite Home Agent in einem Netzwerk befindet, das wenigstens das Routing von Paketen mit einem Header der ersten Internetprotokoll-Version zu dem ersten Mobile Node und das Routing von Paketen mit einem Header der zweiten Internetprotokoll-Version zu dem ersten Correspondent Node unterstützt;
Bootstrapping (508) mit dem zweiten Home Agent, um eine zweite Home-Adresse der zweiten Internetprotokoll-Version und andere Kommunikationsparameter zu erfassen;
Registrieren (510) der Position des ersten Mobile Node bei dem zweiten Home Agent durch Senden eines ersten Binding-Update, das die topologisch korrekte Adresse der ersten Internetprotokoll-Version des ersten Mobile Node als Care-of-Adresse und die zweite Home-Adresse als Home-Adresse umfasst;
Senden (512) einer ersten Care-of-Test-Init-Nachricht zu dem ersten Correspondent Node über einen bidirektionalen Tunnel zu dem zweiten Home Agent, wobei der äußere Header der Tunneling unterzogenen Pakete die erste Internetprotokoll-Version verwendet, der innere Header der Tunneling unterzogenen Pakete die zweite Internetprotokoll-Version verwendet und eine Ursprungsadresse in dem Internetprotokoll-Header der ersten Care-of-Test-Init-Nachricht auf die zweite Home-Adresse festgelegt ist;
Empfangen (512) einer Care-of-Test-Nachricht von dem ersten Correspondent Node über den bidirektionalen Tunnel zu dem zweiten Home Agent;
Registrieren (514) der Position des ersten Mobile Node bei dem ersten Correspondent Node durch Senden einer zweiten Binding-Update-Nachricht, die die zweite Home-Adresse als Care-of-Adresse und die erste Home-Adresse als Home-Adresse umfasst, wobei die zweite Binding-Update-Nachricht über den bidirektionalen Tunnel zu dem zweiten Home Agent gesendet wird, der äußere Header der Tunneling unterzogenen Pakete die erste Internetprotokoll-Version verwendet und der innere Header der Tunneling unterzogenen Pakete die zweite Internetprotokoll-Version verwendet; und
Verwenden des Routenoptimierungsmodus über den bidirektionalen Tunnel zu dem zweiten Home Agent für Kommunikation zwischen dem ersten Mobile Node und dem ersten Correspondent Node mit den in dem Bootstrapping-Schritt festgelegten Kommunikationsparametern durch Senden für den ersten Correspondent Node bestimmter Datenpakete durch den ersten Mobile Node über den bidirektionalen Tunnel zu dem zweiten Home Agent, wobei die Datenpakete in dem Tunnel die erste Home-Adresse in einer Home-Adressen-Option, die zweite Home-Adresse als Ursprungsadresse in dem Internetprotokoll-Header und die Adresse des ersten Correspondent Node als Zieladresse in dem Internetprotokoll-Header umfassen, und wobei der äußere Header der Tunneling unterzogenen Pakete die erste Internetprotokoll-Version verwendet und der innere Header der Tunneling unterzogenen Pakete die zweite Internetprotokoll-Version verwendet.

14. Verfahren nach einem der Ansprüche 1 bis 13, wobei die erste Binding-Update-Nachricht in eine UDP-Nachricht eingekapselt wird, wenn sich ein NAT-Router (network address translation router) zur Unterstützung von NAT-Traversal (network address translation traversal) auf dem Pfad befindet.

15. Verfahren nach einem der Ansprüche 1 bis 14, wobei die erste Binding-Update-Nachricht in eine Nachricht der ersten Internetprotokoll-Version eingekapselt ist.

16. Verfahren nach einem der Ansprüche 1 bis 15, das des Weiteren den folgenden Schritt umfasst:
Erfassen eines NAT-Routers auf dem direkten Pfad durch den ersten Home Agent und
Informieren des ersten Mobile Node darüber.

17. Verfahren nach einem der Ansprüche 1 bis 16, wobei die erste Internetprotokoll-Version IPv4 ist und die zweite Internetprotokoll-Version IPv6 ist.

18. Verfahren nach einem der Ansprüche 1 bis 17, wobei das Verfahren angewendet wird, wenn das Netzwerk des ersten Mobile Node und das Netzwerk des ersten Correspondent Node nicht die gleiche Internetprotokoll-Version unterstützen.

19. Verfahren nach einem der Ansprüche 1 bis 17, wobei das Verfahren angewendet wird, wenn der erste Mobile Node eine Anwendung ausführt, die kurze Paketverzögerungen erfordert.

20. Verfahren nach einem der Ansprüche 13 bis 19, wobei der Schritt des Bootstrapping (508) mit dem zweiten Home Agent durch den ersten Mobile Node oder durch einen Proxy-Node im Auftrag des ersten Mobile Node ausgeführt wird.

21. Verfahren nach einem der Ansprüche 13 bis 20, wobei der Schritt des Registrierens (510) der Position des ersten Mobile Node bei dem zweiten Home Agent durch den ersten Mobile Node oder durch einen Proxy Node im Auftrag des ersten Mobile Node ausgeführt wird.

22. Verfahren nach einem der Ansprüche 13 bis 21, wobei der Schritt des Registrierens (514) der Position des ersten Mobile Node bei dem ersten Correspondent Node durch den ersten Mobile Node oder durch einen Proxy Node im Auftrag des ersten Mobile Node ausgeführt wird.

23. Verfahren nach einem der Ansprüche 13 bis 22, wobei die Schritte des Sendens und Empfangens von Care-of-Test-Init- und Care-of-Test-Nachrichten (512) zu und von dem ersten Correspondent Node durch den ersten Mobile Node oder durch einen Proxy Node im Auftrag des ersten Mobile Node ausgeführt werden.

24. Verfahren nach einem der Ansprüche 13 bis 23, wobei der Schritt des Lokalisierens (506) des zweiten der Vielzahl von Home Agents durch den ersten Mobile Node oder durch einen Proxy Node im Auftrag des ersten Mobile Node ausgeführt wird.

25. Verfahren nach einem der Ansprüche 13 bis 24, wobei sich der zweite Home Agent näher an dem ersten Correspondent Node befindet als an dem ersten Mobile Node.

26. Verfahren nach einem der Ansprüche 13 bis 25, wobei der Schritt des Lokalisierens (506) des zweiten der Vielzahl von Home Agents zwischen dem ersten Correspondent Node und dem ersten Mobile Node den folgenden Schritt umfasst:
Abfragen eines Domain-Namen-Servers nach einer Home-Agent-Adresse, wobei der Domain-Name wenigstens aus dem Domain-Namen des ersten Correspondent Node und einer Zeichenfolge aufgebaut ist, die anzeigt, dass eine Home Agent erforderlich ist, der das Routing von Paketen mit dem Header der ersten Internetprotokoll-Version und von Paketen mit dem Header der zweiten Internetprotokoll-Version unterstützt, um eine Adresse des zweiten Home Agent in einer gleichen Domäne wie der des ersten Correspondent Node zu finden.

27. Verfahren nach einem der Ansprüche 13 bis 26, wobei der Schritt des Lokalisierens (506) des zweiten der Vielzahl von Home Agents die folgenden Schritte umfasst:
Setzen eines Flag in einer ersten Anforderungsnachricht, um anzuzeigen, dass ein Home Agent erforderlich ist, der das Routing von Paketen mit dem Header der ersten Internetprotokoll-Version und von Paketen mit dem Header der zweiten Internetprotokoll-Version unterstützt;
Setzen der Zieladresse in dem Internetprotokoll-Header der ersten Anforderungsnachricht auf eine Anycast-Adresse, die wenigstens aus dem Präfix der Adresse des ersten Correspondent Node aufgebaut ist;
Setzen der Ursprungsadresse in dem Internetprotokoll-Header der ersten Anforderungsnachricht auf die Home-Adresse, die dem zweiten Home Agent entspricht;
Durchführen von Reverse-Tunneling der ersten Anforderungsnachricht zu einem zweiten der Vielzahl von Home Agents, der das Routing von Paketen mit Header der ersten Internetprotokoll-Version und von Paketen mit dem Header der zweiten Internetprotokoll-Version unterstützt, wobei der erste Mobile Node bei dem zweiten Home Agent registriert ist und sich der zweite Home Agent an einer beliebigen Position im System paketvermittelter Netzwerke befindet; und
Antworten auf die Anforderung mit einer Adresse des ersten Home Agents durch einen der Vielzahl von Home Agents.

28. Verfahren nach einem der Ansprüche 13 bis 26, wobei der Schritt des Lokalisierens (506) des zweiten der Vielzahl von Home Agents die folgenden Schritte umfasst:
Senden einer Anforderung, die Informationen über den ersten Correspondent Node und eine Anzeige dahingehend enthält, dass ein Home Agent erforderlich ist, der das Routing von Paketen mit dem Header der ersten Internetprotokoll-Version und von Paketen mit dem Header der zweiten Internetprotokoll-Version unterstützt, zu einem dedizierten Netzwerkelement; und
Empfangen einer Antwort von dem dedizierten Netzwerkelement mit einer Adresse des zweiten Home Agent.

29. Verfahren nach Anspruch 28, das des Weiteren den folgenden Schritt umfasst, der durch das dedizierte Netzwerkelement ausgeführt wird:
Zuordnen einer Adresse des ersten Correspondent Node zu einer Adresse eines einer Vielzahl von Home Agents, der das Routing von Paketen mit dem Header der ersten Internetprotokoll-Version und von Paketen mit dem Header der zweiten Internetprotokoll-Version unterstützt und der sich nahe an dem ersten Correspondent Node befindet.

30. Verfahren nach Anspruch 29, wobei die Zuordnung vorkonfiguriert ist oder dynamisch festgestellt wird.

31. Verfahren nach einem der Ansprüche 13 bis 26, wobei der Schritt des Lokalisierens (506) des zweiten der Vielzahl von Home Agents die folgenden Schritte umfasst:
Setzen eines Flag in einer ersten Nachricht zum Anfordern eines dynamischen HostKonfigurations-Protokolls, um anzuzeigen, dass ein Home Agent erforderlich ist, der das Routing von Paketen mit der ersten Internetprotokoll-Version und von Paketen mit dem Header der zweiten Internetprotokoll-Version unterstützt;
Senden der ersten Nachricht zum Anfordern des dynamischen Host-Konfigurations-Protokolls, um den ersten Home Agent zu lokalisieren;
Senden einer Antwort bezüglich des dynamischen Hostkonfigurations-Protokolls, die eine Adresse des ersten Home Agent enthält, durch einen Server für das dynamische Hostkonfigurations-Protokoll;
Antworten mit einer Adresse des ersten Home Agent durch einen Server für das dynamische Hostkonfigurations-Protokoll,
wobei, wenn sich der erste Home Agent in einem anderen Netzwerk befindet als der erste Mobile Node, die erste Nachricht bezüglich des dynamischen Hostkonfigurations-Protokolls, die durch den ersten Mobile Node gesendet wird, die Adresse des ersten Correspondent Node enthält.

32. Verfahren nach einem der Ansprüche 13 bis 31, wobei der zweite Home Agent in einer nachfolgenden Kommunikationssitzung mit dem gleichen oder anderen Correspondent Node/s in der gleichen oder einer nahe gelegenen Domäne wiederverwendet wird, indem die Schritte des Lokalisierens und Bootstrappings ausgelassen werden.

33. Mobile Node (100) in einem System paketvermittelter Netzwerke, die verschiedene Internetprotokoll-Versionen verwenden und eine Vielzahl von Home Agents sowie wenigstens einen Correspondent Node umfassen, wobei der Mobile Node (100) mit wenigstens einer topologisch korrekten Internetprotokoll-Adresse einer ersten Internetprotokoll-Version konfiguriert ist und sich in einem Netzwerk befindet, das wenigstens Routing von Paketen mit einem Header der ersten Internetprotokoll-Version unterstützt, wobei der Mobile Node (100) umfasst:
eine Anwendung, die so eingerichtet ist, dass sie Kommunikation mit einem ersten Correspondent Node (102) anfordert, der mit wenigstens einer Internetprotokoll-Adresse einer zweiten Internetprotokoll-Version konfiguriert ist und sich in einem Netzwerk befindet, das wenigstens das Routing von Paketen mit einem Header der zweiten Internetprotokoll-Version unterstützt;
eine Lokalisierungseinrichtung, die einen ersten (104) der Vielzahl von Home Agents in der Nähe zu einem direkten Pfad zwischen dem Mobile Node (100) und dem ersten Correspondent Node (102) lokalisiert, wobei sich der erste Home Agent (104) in einem Netzwerk befindet, das wenigstens das Routing von Paketen mit einem Header der ersten Internetprotokoll-Version zu dem Mobile Node und das Routing von Paketen mit einem Header der zweiten Internetprotokoll-Version zu dem ersten Correspondent Node unterstützt;
eine Bootstrapping-Einrichtung, die so eingerichtet ist, dass sie Bootstrapping mit dem ersten Home Agent (104) durchführt, um eine erste Home-Adresse der zweiten Internetprotokoll-Version und andere Kommunikationsparameter zu erfassen;
eine Sendeeinrichtung, die so eingerichtet ist, dass sie eine erste Binding-Update-Nachricht sendet, die die topologisch korrekte Adresse der ersten Internetprotokoll-Version des Mobile Node als Care-of-Adresse und die erste Home-Adresse als Home-Adresse umfasst; und
eine Kommunikationseinrichtung, die so eingerichtet ist, dass sie den ersten Home Agent (104) in bidirektionalem Tunneling-Modus für Kommunikation mit dem ersten Correspondent Node mit den in dem Bootstrapping-Schritt festgelegten Kommunikationsparametern und der ersten Home-Adresse als Home-Adresse verwendet, wobei der äußere Header der Tunneling unterzogenen Pakete die erste Internetprotokoll-Version verwendet und der innere Header der Tunneling unterzogenen Pakete die zweite Internetprotokoll-Version verwendet.

34. Mobile Node nach Anspruch 33, der so eingerichtet ist, dass er die Verfahrensschritte nach einem der Ansprüche 2 bis 12 ausführt.

35. System paketvermittelter Netzwerke, die verschiedene Internetprotokoll-Versionen verwenden und eine Vielzahl von Home Agents sowie wenigstens einen Correspondent Node umfassen, wobei ein erster Mobile Node (100) mit wenigstens einer topologisch korrekten Internetprotokoll-Adresse einer ersten Internetprotokoll-Version konfiguriert ist und sich in einem Netzwerk befindet, das wenigstens Routing von Paketen mit einem Header der ersten Internetprotokoll-Version unterstützt, wobei der Mobile Node (100) umfasst:
eine Anwendung an dem ersten Mobile Node (100), die so eingerichtet ist, dass sie Kommunikation mit einem ersten Correspondent Node (102) anfordert, der mit wenigstens einer Internetprotokoll-Adresse einer zweiten Internetprotokoll-Version konfiguriert ist und sich in einem Netzwerk befindet, das wenigstens das Routing von Paketen mit einem Header der zweiten Internetprotokoll-Version unterstützt;
eine Lokalisierungseinrichtung, die einen ersten (104) der Vielzahl von Home Agents in der Nähe zu einem direkten Pfad zwischen dem Mobile Node (100) und dem ersten Correspondent Node (102) lokalisiert, wobei sich der erste Home Agent (104) in einem Netzwerk befindet, das wenigstens das Routing von Paketen mit einem Header der ersten Internetprotokoll-Version zu dem Mobile Node und das Routing von Paketen mit einem Header der zweiten Internetprotokoll-Version zu dem ersten Correspondent Node unterstützt;
eine Bootstrapping-Einrichtung, die so eingerichtet ist, dass sie Bootstrapping mit dem ersten Home Agent (104) durchführt, um eine erste Home-Adresse der zweiten Internetprotokoll-Version und andere Kommunikationsparameter zu erfassen;
eine Registrierungseinrichtung, die so eingerichtet ist, dass sie die Position des ersten Mobile Node bei dem ersten Home Agent (104) registriert, indem sie eine erste Binding-Update-Nachricht sendet, die die topologisch korrekte Adresse der ersten Internetprotokoll-Version des Mobile Node als Care-of-Adresse und die erste Home-Adresse als Home-Adresse umfasst; und wobei
der erste Home Agent (104) so eingerichtet ist, dass er in einem bidirektionalen Tunneling-Modus für Kommunikation mit dem ersten Correspondent Node mit den in dem Bootstrapping-Schritt festgelegten Kommunikationsparametern und der ersten Home-Adresse als Home-Adresse verwendet wird, wobei der äußere Header der Tunneling unterzogenen Pakete die erste Internetprotokoll-Version verwendet und der innere Header der Tunneling unterzogenen Pakete die zweite Internetprotokoll-Version verwendet.

36. System nach Anspruch 35, das so eingerichtet ist, dass es die Verfahrensschritte nach einem der Ansprüche 2 bis 12 ausführt.

37. Computerlesbares Medium, das Befehle speichert, die, wenn sie von einem Prozessor eines Mobile Node in einem System paketvermittelter Netzwerke ausgeführt werden, die verschiedene Internetprotokoll-Versionen verwenden und eine Vielzahl von Home Agents sowie wenigstens einen Correspondent Node umfassen, wobei der Mobile Node mit wenigstens einer topologisch korrekten Internetprotokoll-Adresse einer ersten Internetprotokoll-Version konfiguriert ist und sich in einem Netzwerk befindet, das wenigstens Routing von Paketen mit einem Header der ersten Internetprotokoll-Version unterstützt, den Mobile Node veranlassen, die folgenden Schritte auszuführen:
Anfordern (402) von Kommunikation mit einem ersten Correspondent Node, der mit wenigstens einer Internetprotokoll-Adresse einer zweiten Internetprotokoll-Version konfiguriert ist und sich in einem Netzwerk befindet, das wenigstens das Routing von Paketen mit einem Header der zweiten Internetprotokoll-Version unterstützt, durch eine Anwendung an dem ersten Mobile Node,
Lokalisieren (404) eines ersten der Vielzahl von Home Agents in der Nähe zu einem direkten Pfad zwischen dem ersten Mobile Node und dem ersten Correspondent Node, wobei sich der erste Home Agent in einem Netzwerk befindet, das wenigstens das Routing von Paketen mit einem Header der ersten Internetprotokoll-Version zu dem Mobile Node und das Routing von Paketen mit einem Header der zweiten Internetprotokoll-Version zu dem ersten Correspondent Node unterstützt;
Durchführen von Bootstrapping (406) mit dem ersten Home Agent, um eine erste Home-Adresse der zweiten Internetprotokoll-Version und andere Kommunikationsparameter zu erfassen;
Senden einer ersten Binding-Update-Nachricht, die eine topologisch korrekte Adresse der ersten Internetprotokoll-Version des ersten Mobile Node als Care-of-Adresse und die erste Home-Adresse als Home-Adresse umfasst; und
Verwenden (410) des ersten Home Agent in bidirektionalem Tunneling-Modus, für Kommunikation mit dem ersten Correspondent Node mit den in dem Bootstrapping-Schritt festgelegten Kommunikationsparametern und der ersten Home-Adresse als Home-Adresse, wobei der äußere Header der Tunneling unterzogenen Pakete die erste Internetprotokollversion verwendet und der innere Header der Tunneling unterzogenen Pakete die zweite Internetprotokoll-Version verwendet.

38. Computerlesbares Medium nach Anspruch 37, das Befehle speichert, die, wenn sie von einem Prozessor eines Mobile Node in einem System paketvermittelter Netzwerke ausgeführt werden, die verschiedene Internetprotokoll-Versionen verwenden und eine Vielzahl von Home Agents sowie wenigstens einen Correspondent Node umfassen,
wobei der Mobile Node mit wenigstens einer topologisch korrekten Internetprotokoll-Adresse einer ersten Internetprotokoll-Version konfiguriert ist und sich in einem Netzwerk befindet, das wenigstens Routing von Paketen mit einem Header der ersten Internetprotokoll-Version unterstützt, den Mobile Node veranlassen, die Schritte nach einem der Ansprüche 2 bis 12 auszuführen.

39. Mobile Node (100) für ein System paketvermittelter Netzwerke, die verschiedene Internetprotokoll-Versionen verwenden und eine Vielzahl von Home Agents sowie wenigstens einen Correspondent Node umfassen, wobei der Mobile Node (100) mit wenigstens einer topologisch korrekten Internetprotokoll-Adresse einer ersten Internetprotokoll-Version und einer ersten Home-Adresse einer zweiten Internetprotokoll-Version konfiguriert ist und sich in einem Netzwerk befindet, das wenigstens Routing von Paketen mit einem Header der ersten Internetprotokoll-Version unterstützt, wobei der Mobile Node umfasst:
eine Empfangseinrichtung, die so eingerichtet ist, dass sie erste Datenpakete von einem ersten Correspondent Node (102) empfängt, die über einen ersten Home Agent (104) getunnelt werden;
eine Lokalisierungseinrichtung, die so eingerichtet ist, dass sie einen zweiten (206) der Vielzahl von Home Agents in der Nähe zu einem direkten Weg zwischen dem Mobile Node (100) und dem ersten Correspondent Node (102) lokalisiert, wobei sich der zweite Home Agent in einem Netzwerk befindet, das wenigstens das Routing von Paketen mit einem Header der ersten Internetprotokoll-Version zu dem Mobile Node (100) und
das Routing von Paketen mit einem Header der zweiten Internetprotokoll-Version zu dem ersten Correspondent Node (102) unterstützt;
eine Bootstrappingeinrichtung, die so eingerichtet ist, dass sie Bootstrapping mit dem zweiten Home Agent (206) durchführt, um eine zweite Home-Adresse der zweiten Internetprotokoll-Version und andere Kommunikationsparameter zu erfassen;
eine Sendeeinrichtung, die so eingerichtet ist, dass sie ein erstes Binding-Update sendet, das die topologisch korrekte Adresse der ersten Internetprotokoll-Version als Care-of-Adresse und die zweite Home-Adresse als Home-Adresse umfasst;
wobei die Sendeeinrichtung des Weiteren so eingerichtet ist, dass sie eine erste Care-of-Test-Init-Nachricht zu dem ersten Correspondent Node (102) über einen bidirektionalen Tunnel zu dem zweiten Home Agent (206) sendet, wobei der äußere Header der Tunneling unterzogenen Pakete die erste Internetprotokoll-Version verwende, der innere Header der Tunneling unterzogenen Pakete die zweite Internetprotokoll-Version verwendet und eine Ursprungsadresse in dem Internetprotokoll-Header der ersten Care-of-Test-Init-Nachricht auf die zweite Home-Adresse festgelegt ist;
die Empfangseinrichtung des Weiteren so eingerichtet ist, dass sie eine Care-of-Test-Nachricht von dem ersten Correspondent Node (102) über den bidirektionalen Tunnel zu dem zweiten Home Agent (206) empfängt;
die Sendeeinrichtung des Weiteren so eingerichtet ist, dass sie eine zweite Binding-Update-Nachricht sendet, die die zweite Home-Adresse als Care-of-Adresse und die erste Home-Adresse als Home-Adresse umfasst, wobei die zweite Binding-Update-Nachricht über den bidirektionalen Tunnel zu dem zweiten Home Agent (206) gesendet wird, der äußere Header der Tunneling unterzogenen Pakete die erste Internetprotokoll-Version verwendet und der innere Header der Tunneling unterzogenen Pakete die zweite Internetprotokoll-Version verwendet; und
eine Kommunikationseinrichtung, die so eingerichtet ist, dass sie den Routenoptimierungsmodus über den bidirektionalen Tunnel zu dem zweiten Home Agent (206) für Kommunikation zwischen dem ersten Mobile Node und dem ersten Correspondent Node mit den in dem Bootstrapping-Schritt festgelegten Kommunikationsparametern durch Senden für den ersten Correspondent Node bestimmter Datenpakete durch den ersten Mobile Node über den bidirektionalen Tunnel zu dem zweiten Home Agent gesendet werden, verwendet, wobei die Datenpakete in dem Tunnel die erste Home-Adresse in einer Home-Adressen-Option, die zweite Home-Adresse als Ursprungsadresse in dem Internetprotokoll-Header und die Adresse des ersten Correspondent Node als Zieladresse in dem Internetprotokoll-Header umfassen, und wobei der äußere Header der Tunneling unterzogenen Pakete die erste Internetprotokoll-Version verwendet und der innere Header der Tunneling unterzogenen Pakete die zweite Internetprotokoll-Version verwendet.

40. Mobile Node nach Anspruch 39, der so eingerichtet ist, dass er die Verfahrensschritte der Ansprüche 14 bis 32 ausführt.

41. System paketvermittelter Netzwerke, die verschiedene Internetprotokoll-Versionen verwenden und eine Vielzahl von Home Agents, wenigstens einen Mobile Node sowie wenigstens einen Correspondent Node umfassen, wobei ein erster Mobile Node (100) mit wenigstens einer topologisch korrekten Internetprotokoll-Adresse einer ersten Internetprotokoll-Version und einer ersten Home-Adresse einer zweiten Internetprotokoll-Version konfiguriert ist und sich in einem Netzwerk befindet, das wenigstens Routing von Paketen mit einem Header der ersten Internetprotokoll-Version unterstützt,
wobei das System umfasst:
eine Anwendung an einem ersten Correspondent Node (102), der mit wenigstens einer Internetprotokoll-Adresse einer zweiten Internetprotokoll-Version konfiguriert ist und sich in einem Netzwerk befindet, das wenigstens das Routing von Paketen mit einem Header der zweiten Internetprotokoll-Version unterstützt, die eine Kommunikationssitzung mit dem ersten Mobile Node (100) durch Senden von Datenpaketen mit einem Header der zweiten Internetprotokoll-Version zu der ersten Home-Adresse des ersten Mobile Node startet, wobei die erste Home-Adresse und eine erste von topologisch korrekten Adressen des Mobile Node bei einem ersten Home Agent (104) registriert sind;
wobei der erste Mobile Node (100) so eingerichtet ist, dass er erste Datenpakete von dem ersten Correspondent Node (102) empfängt, die über den ersten Home Agent (104) getunnelt werden;
eine Lokalisierungseinrichtung, die so eingerichtet ist, dass sie einen zweiten (206) der Vielzahl von Home Agents in der Nähe zu einem direkten Pfad zwischen dem ersten Mobile Node (100) und dem ersten Correspondent Node (102) lokalisiert, wobei sich der zweite Home Agent (206) in einem Netzwerk befindet, das wenigstens das Routing von Paketen mit einem Header der ersten Internetprotokoll-Version zu dem ersten Mobile Node (100) und das Routing von Paketen mit einem Header der zweiten Internetprotokoll-Version zu dem ersten Correspondent Node (102) unterstützt;
eine Bootstrapping-Einrichtung, die so eingerichtet ist, dass sie Bootstrapping mit dem zweiten Home Agent (206) durchführt, um eine zweite Home-Adresse der zweiten Internetprotokoll-Version und andere Kommunikationsparameter zu erfassen;
wobei der erste Mobile Node (100) des Weiteren so eingerichtet ist, dass er:
ein erstes Binding-Update sendet, das die topologisch korrekte Adresse der ersten Internetprotokoll-Version des ersten Mobile Node als Care-of-Adresse und die zweite Home-Adresse als Home-Adresse umfasst;
eine erste Care-of-Test-Init-Nachricht zu dem ersten Correspondent Node (102) über einen bidirektionalen Tunnel zu dem zweiten Home Agent sendet, wobei der äußere Header der Tunneling unterzogenen Pakete die erste Internetprotokoll-Version verwendet, der innere Header der Tunneling unterzogenen Pakete die zweite Internetprotokoll-Version verwendet, und eine Ursprungsadresse in dem Internetprotokoll-Header der ersten Care-of-Test-Init-Nachricht auf die zweite Home-Adresse festgelegt wird;
eine Care-of-Test-Nachricht von dem ersten Correspondent Node (102) über den bidirektionalen Tunnel zu dem zweiten Home-Agent sendet;
eine zweite Binding-Update-Nachricht sendet, die die zweite Home-Adresse als Care-of-Adresse und die erste Home-Adresse als Home-Adresse umfasst, wobei die zweite Binding-Update-Nachricht über den bidirektionalen Tunnel zu dem zweiten Home Agent (206) gesendet wird, der äußere Header der Tunneling unterzogenen Pakete die erste Internetprotokoll-Version verwendet und der innere Header der Tunneling unterzogenen Pakete die zweite Internetprotokoll-Version verwendet; und
den Routen-Optimierungsmodus über den bidirektionalen Tunnel zu dem zweiten Home Agent (206) für Kommunikation zwischen dem ersten Mobile Node (100) und dem ersten Correspondent Node (102) mit den durch die Bootstrapping-Einrichtung festgelegten Kommunikationsparametern durch Senden für den ersten Correspondent Node (102) bestimmter Datenpakete durch den ersten Mobile Node (100) über den bidirektionalen Tunnel zu dem zweiten Home Agent (206) verwendet, wobei die Datenpakete in dem Tunnel die erste Home-Adresse in einer Home-Adressen-Option, die zweite Home-Adresse als Ursprungsadresse in dem Internetprotokoll-Header und die Adresse des ersten Correspondent Node als Zieladresse in dem Internetprotokoll-Header umfassen, und wobei der äußere Header der Tunneling unterzogenen Pakete die erste Internetprotokoll-Version verwendet und der innere Header der Tunneling unterzogenen Pakete die zweite Internetprotokoll-Version verwendet.

42. System nach Anspruch 41, das so eingerichtet ist, dass es die Verfahren nach einem der Ansprüche 14 bis 33 ausführt.

43. Computerlesbares Medium, das Befehle speichert, die, wenn sie von einem Prozessor eines Mobile Node in einem System paketvermittelter Netzwerke ausgeführt werden, die verschiedene Internetprotokoll-Versionen verwenden und eine Vielzahl von Home Agents sowie wenigstens einen Correspondent Node umfassen, wobei der Mobile Node mit wenigstens einer topologisch korrekten Internetprotokoll-Adresse einer ersten Internetprotokoll-Version und einer ersten Home-Adresse einer zweiten Internetprotokoll-Version konfiguriert ist und sich in einem Netzwerk befindet, das wenigstens Routing von Paketen mit einem Header der ersten Internetprotokoll-Version unterstützt, den Mobile Node veranlassen, die folgenden Schritte auszuführen:
Empfangen erster Datenpakete von einem ersten Correspondent Node, die über einen ersten Home Agent getunnelt werden;
Lokalisieren eines zweiten der Vielzahl von Home Agents in der Nähe zu einem direkten Pfad zwischen dem Mobile Node und dem ersten Correspondent Node, wobei sich der zweite Home Agent in einem Netzwerk befindet, das wenigstens das Routing von Paketen mit einem Header der ersten Internetprotokoll-Version zu dem Mobile Node und das Routing von Paketen mit einem Header der zweiten Internetprotokoll-Version zu dem ersten Correspondent Node unterstützt;
Bootstrapping mit dem zweiten Home Agent, um eine zweite Home-Adresse der zweiten Internetprotokoll-Version und andere Kommunikationsparameter zu erfassen;
Senden eines ersten Binding-Update, das die topologisch korrekte Adresse der ersten Internetprotokoll-Version des Mobile Node als Care-of-Adresse und die zweite Home-Adresse als Home-Adresse umfasst;
Senden (512) einer ersten Care-of-Test-Init-Nachricht zu dem ersten Correspondent Node über einen bidirektionalen Tunnel zu dem zweiten Home Agent, wobei der äußere Header der Tunneling unterzogenen Pakete die erste Internetprotokoll-Version verwendet, der innere Header der Tunneling unterzogenen Pakete die zweite Internetprotokoll-Version verwendet, und eine Ursprungsadresse in dem Internetprotokoll-Header der ersten Care-of-Test-Init-Nachricht auf die zweite Home-Adresse festgelegt ist;
Empfangen (512) einer Care-of-Test-Nachricht von dem ersten Correspondent Node über den bidirektionalen Tunnel zu dem zweiten Home Agent;
Senden einer zweiten Binding-Update-Nachricht, die die zweite Home-Adresse als Care-of-Adresse und die erste Home-Adresse als Home-Adresse umfasst, wobei die zweite Binding-Update-Nachricht über den bidirektionalen Tunnel zu dem zweiten Home Agent (206) gesendet wird, der äußere Header der Tunneling unterzogenen Pakete die erste Internetprotokoll-Version verwendet und der innere Header der Tunneling unterzogenen Pakete die zweite Internetprotokoll-Version verwendet; und
Verwenden des Routen-Optimierungsmodus über den bidirektionalen Tunnel zu dem zweiten Home Agent (206) für Kommunikation zwischen dem ersten Mobile Node (100) und dem ersten Correspondent Node (102) mit den durch die Bootstrapping-Einrichtung festgelegten Kommunikationsparametern durch Senden für den ersten Correspondent Node (102) bestimmter Datenpaketer durch den ersten Mobile Node (100) über den bidirektionalen Tunnel zu dem zweiten Home Agent (206), wobei die Datenpakete in dem Tunnel die erste Home-Adresse in einer Home-Adressen-Option, die zweite Home-Adresse als Ursprungsadresse in dem Internetprotokoll-Header und die Adresse des ersten Correspondent Node als Zieladresse in dem Internetprotokoll-Header umfassen, und wobei der äußere Header der Tunneling unterzogenen Pakete die erste Internetprotokoll-Version verwendet und der innere Header der Tunneling unterzogenen Pakete die zweite Internetprotokoll-Version verwendet.

44. Computerlesbares Medium nach Anspruch 43, das Befehle speichert, die, wenn sie von einem Prozessor eines Mobile Node in einem System paketvermittelter Netzwerke ausgeführt werden, die verschiedene Internetprotokoll-Versionen verwenden und eine Vielzahl von Home Agents sowie wenigstens einen Correspondent Node umfassen, wobei der Mobile Node mit wenigstens einer topologisch korrekten Internetprotokoll-Adresse einer ersten Internetprotokoll-Version sowie einer ersten Home-Adresse einer zweiten Internetprotokoll-Version konfiguriert ist und sich in einem Netzwerk befindet, das wenigstens Routing von Paketen mit einem Header der ersten Internetprotokoll-Version unterstützt, den Mobile Node veranlassen, die Schritte nach einem der Ansprüche 14 bis 32 auszuführen.

## Revendications

1. Procédé pour acheminer des paquets dans un système de réseaux à commutation de paquets en utilisant différentes versions du protocole Internet comprenant une pluralité d'agents locaux, au moins un noeud mobile et au moins un noeud correspondant, un premier noeud mobile étant configuré avec au moins une adresse du protocole Internet topologiquement correcte d'une première version du protocole Internet et étant situé dans un réseau permettant au moins l'acheminement de paquets ayant un en-tête de la première version du protocole Internet, le procédé comprenant les étapes qui consistent à :
demander (402) une communication avec un premier noeud correspondant étant configuré avec au moins une adresse du protocole Internet d'une deuxième version du protocole Internet et étant situé dans un réseau permettant au moins l'acheminement de paquets ayant un en-tête de la deuxième version du protocole Internet, par une application sur le premier noeud mobile,
situer (404) un premier agent d'une pluralité d'agents locaux à proximité d'un chemin direct entre le premier noeud mobile et le premier noeud correspondant, le premier agent local étant situé dans un réseau permettant au moins l'acheminement de paquets au premier noeud mobile avec les paquets ayant un en-tête de la première version du protocole Internet et l'acheminement de paquets du premier noeud correspondant avec les paquets ayant un en-tête de la deuxième version du protocole Internet ;
amorcer (406) le premier agent local pour obtenir une première adresse locale de la deuxième version du protocole Internet et d'autres paramètres de communication ;
enregistrer (408) l'emplacement du premier noeud mobile avec le premier agent local en envoyant un premier message de mise à jour de liaison qui comprend une adresse topologiquement correcte du premier noeud mobile de la première version du protocole Internet comme adresse temporaire et la première adresse locale comme adresse locale ; et
utiliser (410) le premier agent local dans un mode de tunnelisation bidirectionnel, l'en-tête externe des paquets tunnelisés utilisant la première version du protocole Internet et l'en-tête interne des paquets tunnelisés utilisant la deuxième version du protocole Internet, pour une communication avec le premier noeud correspondant, avec les paramètres de communication établis à l'étape d'amorçage et la première adresse locale comme adresse locale.

2. Procédé selon la revendication 1, dans lequel l'étape d'amorçage (406) du premier agent local est exécutée par le premier noeud mobile ou par un noeud proxy au profit du premier noeud mobile.

3. Procédé selon la revendication 1 ou 2, dans lequel l'étape qui consiste à enregistrer (408) l'emplacement du premier noeud mobile avec le premier agent local est exécutée par le premier noeud mobile ou par un noeud proxy au profit du premier noeud mobile.

4. Procédé selon l'une des revendications 1 à 3, dans lequel l'étape qui consiste à situer (404) le premier agent de la pluralité d'agents locaux est exécutée par le premier noeud mobile ou par un noeud proxy au profit du premier noeud mobile.

5. Procédé selon l'une des revendications 1 à 4, dans lequel le premier agent local est situé plus près du premier noeud correspondant que le premier noeud mobile.

6. Procédé selon l'une des revendications 1 à 5, dans lequel l'étape qui consiste à situer (404) le premier agent de la pluralité d'agents locaux comprend l'étape qui consiste à :
demander un serveur de noms de domaine pour une adresse d'agent local, le nom de domaine étant construit à partir du nom de domaine du premier noeud correspondant au moins et une chaîne indiquant qu'un agent local permettant l'acheminement de paquets ayant l'en-tête de la première version du protocole Internet et de paquets ayant l'en-tête de la deuxième version du protocole Internet est requis, afin de trouver une adresse du premier agent local.

7. Procédé selon l'une des revendications 1 à 5, dans lequel l'étape qui consiste à situer (404) le premier agent de la pluralité d'agents locaux comprend les étapes qui consistent à :
établir un drapeau dans un premier message de requête pour indiquer qu'un agent local permettant l'acheminement de paquets ayant l'en-tête de la première version du protocole Internet et de paquets ayant l'en-tête de la deuxième version du protocole Internet est requis ;
établir l'adresse de destination dans l'en-tête du protocole Internet du premier message de requête à une adresse d'uni-diffusion aléatoire faite du préfixe de l'adresse du premier noeud correspondant au moins;
établir l'adresse source dans l'en-tête du protocole Internet du premier message de requête à l'adresse locale correspondant au deuxième agent local ;
exécuter une tunnelisation inverse du premier message de requête à un deuxième agent de la pluralité d'agents locaux permettant l'acheminement de paquets ayant l'en-tête de la première version du protocole Internet et de paquets ayant l'en-tête de la deuxième version du protocole Internet, le premier noeud mobile étant enregistré avec le deuxième agent local et le deuxième agent local situé n'importe où dans un système de réseaux à commutation de paquets ; et
répondre par l'un de la pluralité d'agents locaux à la requête avec une adresse du premier agent local.

8. Procédé selon l'une des revendications 1 à 5, dans lequel l'étape qui consiste à situer (404) le premier agent de la pluralité des agents locaux comprend les étapes suivantes :
envoyer une requête contenant des informations sur le premier noeud correspondant et une indication qui indique qu'un agent local permettant l'acheminement de paquets ayant l'en-tête de la première version du protocole Internet et de paquets ayant l'en-tête de la deuxième version du protocole Internet est requis à une entité de réseau dédié ; et
recevoir une réponse de l'entité de réseau dédié avec une adresse du premier agent local.

9. Procédé selon la revendication 8, comprenant en plus l'étape suivante exécutée par l'entité de réseau dédié:
mapper une adresse du premier noeud correspondant sur une adresse d'un agent d'une pluralité d'agents locaux permettant l'acheminement de paquets ayant l'en-tête de la première version du protocole Internet et de paquets ayant l'en-tête de la deuxième version du protocole Internet et situés près du premier noeud correspondant.

10. Procédé selon la revendication 9, dans lequel le mappage est préconfiguré ou dynamiquement découvert.

11. Procédé selon l'une des revendications 1 à 5, dans lequel l'étape qui consiste à situer (404) le premier agent de la pluralité d'agents locaux comprend les étapes qui consistent à :
établir un drapeau dans un premier message de requête DHCP pour indiquer qu'un agent local permettant l'acheminement de paquets ayant l'en-tête de la première version du protocole Internet et de paquets ayant l'en-tête de la deuxième version du protocole Internet est requis ;
envoyer le premier message de requête DHCP pour situer le premier agent local ;
envoyer, par un serveur DHCP, une réponse DHCP contenant une adresse du premier agent local ;
où, si le premier agent local se trouve dans un réseau différent au premier noeud mobile, le premier message DHCP envoyé par le premier noeud mobile contient l'adresse du premier noeud correspondant.

12. Procédé selon l'une des revendications 1 à 11, dans lequel le premier agent local est réutilisé dans une session de communication subséquente avec le même noeud ou d'autres noeuds correspondants dans le même domaine ou dans un domaine avoisinant en sautant les étapes d'emplacement et d'amorçage.

13. Procédé pour acheminer des paquets dans un système de réseaux à commutation de paquets en utilisant différentes versions du protocole Internet qui comprennent plusieurs agents locaux, au moins un noeud mobile et au moins un noeud correspondant, un premier noeud mobile étant configuré avec au moins une adresse topologiquement correcte du protocole Internet d'une première version du protocole Internet et une première adresse locale d'une deuxième version du protocole Internet et étant situé dans un réseau permettant au moins l'acheminement de paquets ayant un en-tête de la première version du protocole Internet, le procédé comprenant les étapes qui consistent à :
commencer (502), par une application sur un premier noeud correspondant étant configuré avec au moins une adresse du protocole Internet d'une deuxième version du protocole Internet et étant situé dans un réseau permettant au moins l'acheminement de paquets ayant un en-tête de la deuxième version du protocole Internet, une session de communication avec le premier noeud mobile en envoyant des paquets de données ayant un en-tête de la deuxième version du protocole Internet à la première adresse locale du premier noeud mobile, la première adresse locale et une première adresse des adresses topologiquement correctes du noeud mobile étant enregistrée à un premier agent local ;
recevoir, par le noeud mobile (504), des premiers paquets de données du premier noeud correspondant tunnelisés sur le premier agent local ;
situer (506) un deuxième agent de la pluralité d'agents locaux à proximité d'un chemin direct entre le premier noeud mobile et le premier noeud correspondant, le deuxième agent local étant situé dans un réseau permettant au moins l'acheminement de paquets au premier noeud mobile avec les paquets ayant un en-tête de la première version du protocole Internet et l'acheminement de paquets au premier noeud correspondant avec les paquets ayant un en-tête de la deuxième version du protocole Internet ;
amorcer (508) le deuxième agent local pour obtenir une deuxième adresse locale de la deuxième version du protocole Internet et d'autres paramètres de communication ;
enregistrer (510) l'emplacement du premier noeud mobile avec le deuxième agent local en envoyant une première mise à jour de liaison qui comprend l'adresse topologiquement correcte du premier noeud mobile de la première version du protocole Internet comme adresse temporaire et la deuxième adresse locale comme adresse locale ;
envoyer (512) un premier message d'initialisation de test temporaire au premier noeud correspondant sur un tunnel bidirectionnel au deuxième agent local, l'en-tête externe des paquets tunnelisés utilisant la première version du protocole Internet et l'en-tête interne des paquets tunnelisés utilisant la deuxième version du protocole Internet, avec une adresse source dans l'en-tête du protocole Internet du premier message d'initialisation de test temporaire établi à la deuxième adresse locale ;
recevoir (512) un message de test temporaire du premier noeud correspondant sur le tunnel bidirectionnel au deuxième agent local ;
enregistrer (514) l'emplacement du premier noeud mobile avec le premier noeud correspondant en envoyant un deuxième message de mise à jour de liaison qui comprend la deuxième adresse locale comme adresse temporaire et la première adresse locale comme adresse locale, le deuxième message de mise à jour de liaison envoyé sur le tunnel bidirectionnel au deuxième agent local, l'en-tête externe des paquets tunnelisés utilisant la première version du protocole Internet et l'en-tête interne des paquets tunnelisés utilisant la deuxième version du protocole Internet ; et
utiliser (516) le mode d'optimisation de route sur le tunnel bidirectionnel au deuxième agent local, l'en-tête externe des paquets tunnelisés utilisant la première version du protocole Internet et l'en-tête interne des paquets tunnelisés utilisant la deuxième version du protocole Internet, pour une communication entre le premier noeud mobile et le premier noeud correspondant avec les paramètres de communication établis à l'étape d'amorçage en envoyant des paquets de données destinés au premier noeud correspondant par le premier noeud mobile sur le tunnel bidirectionnel au deuxième agent local, les paquets de données dans le tunnel comprenant la première adresse locale dans une option d'adresse locale, la deuxième adresse locale comme adresse source dans l'en-tête du protocole Internet et l'adresse du premier noeud correspondant comme adresse de destination dans l'en-tête du protocole internet.

14. Procédé selon l'une des revendications 1 à 13, dans lequel le premier message de mise à jour de liaison est encapsulé dans un message du protocole UDP lorsqu'un routeur de traduction d'adresses de réseau est sur la voie pour permettre le parcours de la traduction d'adresses de réseau.

15. Procédé selon l'une des revendications 1 à 14, dans lequel le premier message de mise à jour de liaison est encapsulé dans un message de la première version du protocole internet.

16. Procédé selon l'une des revendications 1 à 15, comprenant en plus l'étape qui consiste à :
détecter, par le premier agent local, un routeur de traduction d'adresses de réseau sur le chemin direct et informer le premier noeud mobile de cela.

17. Procédé selon l'une des revendications 1 à 16, dans lequel la première version du protocole Internet est IPv4 et la deuxième adresse du protocole Internet est IPv6.

18. Procédé selon l'une des revendications 1 à 17, dans lequel le procédé est appliqué, si le réseau du premier noeud mobile et le réseau du premier noeud correspondant ne soutiennent pas la même version du protocole internet.

19. Procédé selon l'une des revendications 1 à 17, dans lequel le procédé est appliqué, si le premier noeud mobile exécute une application qui requiert de courts retards de paquets.

20. Procédé selon l'une des revendications 13 à 19, dans lequel l'étape qui consiste à amorcer (508) le deuxième agent local est exécutée par le premier noeud mobile ou par un noeud proxy au profit du premier noeud mobile.

21. Procédé selon l'une des revendications 13 à 20, dans lequel l'étape qui consiste à enregistrer (510) l'emplacement du premier noeud mobile avec le deuxième agent local est exécutée par le premier noeud mobile ou par un noeud proxy au profit du premier noeud mobile.

22. Procédé selon l'une des revendications 13 à 21, dans lequel l'étape qui consiste à enregistrer (514) l'emplacement du premier noeud mobile avec le premier noeud correspondant est exécutée par le premier noeud mobile ou par un noeud proxy au profit du premier noeud mobile.

23. Procédé selon l'une des revendications 13 à 22, dans lequel les étapes qui consistent à envoyer et à recevoir des messages (512) d'initialisation de test temporaire et des messages de test temporaire à et du premier noeud correspondant sont exécutées par le premier noeud mobile ou par un noeud proxy au profit du premier noeud mobile.

24. Procédé selon l'une des revendications 13 à 23, dans lequel l'étape qui consiste à situer (506) le deuxième agent de la pluralité d'agents locaux est exécutée par le premier noeud mobile ou par un noeud proxy au profit du premier noeud mobile.

25. Procédé selon l'une des revendications 13 à 24, dans lequel le deuxième agent local est situé plus près du premier noeud correspondant que le premier noeud mobile.

26. Procédé selon l'une des revendications 13 à 25, dans lequel l'étape qui consiste à situer (506) le deuxième agent de la pluralité d'agents locaux entre le premier noeud correspondant et le premier noeud mobile comprend l'étape suivante :
demander un serveur de noms de domaine pour une adresse d'agent local, le nom de domaine étant fait du nom de domaines du premier noeud correspondant au moins et une chaîne qui indique qu'un agent local permettant l'acheminement de paquets ayant l'en-tête de la première version du protocole Internet et de paquets ayant l'en-tête de la deuxième version du protocole Internet est requis, afin de trouver une adresse du deuxième agent local dans un même domaine que le premier noeud correspondant.

27. Procédé selon l'une des revendications 13 à 26, dans lequel l'étape qui consiste à situer (506) le deuxième agent de la pluralité d'agents locaux comprend les étapes qui consistent à :
établir un drapeau dans un premier message de requête pour indiquer qu'un agent local permettant l'acheminement de paquets ayant l'en-tête de la première version du protocole Internet et de paquets ayant l'en-tête de la deuxième version du protocole Internet est requis ;
établir l'adresse de destination dans l'en-tête du protocole Internet du premier message de requête à une adresse d'uni-diffusion aléatoire faite du préfixe de l'adresse du premier noeud correspondant au moins ;
établir l'adresse source dans l'en-tête du protocole Internet du premier message de requête à l'adresse locale correspondant au deuxième agent local ;
exécuter une tunnelisation inverse du premier message de requête à un deuxième agent de la pluralité d'agents locaux permettant l'acheminement de paquets ayant l'en-tête de la première version du protocole Internet et de paquets ayant l'en-tête de la deuxième version du protocole Internet, le premier noeud mobile étant enregistré avec le deuxième agent local et le deuxième agent local étant situé n'importe où dans un système de réseaux à commutation de paquets ; et
répondre par l'un de la pluralité d'agents locaux à la requête avec une adresse du premier agent local.

28. Procédé selon l'une des revendications 13 à 26, dans lequel l'étape qui consiste à situer (506) le deuxième agent de la pluralité d'agents locaux comprend les étapes suivantes :
envoyer une information contenant une requête sur le premier noeud correspondant et une indication qui indique qu'un agent local permettant l'acheminement de paquets ayant l'en-tête de la première version du protocole Internet et de paquets ayant l'en-tête de la deuxième version du protocole Internet est requis à une entité de réseau dédié ; et
recevoir une réponse de l'entité de réseau dédié avec une adresse du deuxième agent local.

29. Procédé selon la revendication 28, comprenant en plus les étapes suivantes exécutées par l'entité de réseau dédié :
mapper une adresse du premier noeud correspondant sur une adresse d'un agent d'une pluralité d'agents locaux permettant l'acheminement de paquets ayant l'en-tête de la première version du protocole Internet et de paquets ayant l'en-tête de la deuxième version du protocole Internet et situés près du premier noeud correspondant.

30. Procédé selon la revendication 29, dans lequel le mappage est préconfiguré ou dynamiquement découvert.

31. Procédé selon l'une des revendications 13 à 26, dans lequel l'étape qui consiste à situer (506) le deuxième agent de la pluralité d'agents locaux comprend les étapes qui consistent à :
établir un drapeau dans un premier message de requête DHCP pour indiquer qu'un agent local permettant l'acheminement de paquets ayant l'en-tête de la première version du protocole Internet et de paquets ayant l'en-tête de la deuxième version du protocole Internet est requis ;
envoyer le premier message de requête DHCP pour situer le premier agent local ;
un serveur DHCP répond avec une adresse du premier agent local
où, si le premier agent local est dans un réseau différent au premier noeud mobile, le premier message DHCP envoyé par le premier noeud mobile contient l'adresse du premier noeud correspondant.

32. Procédé selon l'une des revendications 13 à 31, dans lequel le deuxième agent local est réutilisé dans des sessions de communication subséquentes avec le même noeud ou d'autres noeuds correspondants dans le même domaine ou dans un domaine avoisinant en sautant les étapes d'emplacement et d'amorçage.

33. Noeud mobile (100) pour un système de réseaux à commutation de paquets utilisant différentes versions du protocole Internet qui comprennent une pluralité d'agents locaux et au moins un noeud correspondant, le noeud mobile (100) étant configuré avec au moins une adresse topologiquement correcte du protocole Internet d'une première version du protocole Internet et étant situé dans un réseau permettant au moins l'acheminement de paquets ayant un en-tête de la première version du protocole Internet, le noeud mobile (100) comprenant :
une application adaptée pour demander une communication avec un premier noeud correspondant (102) étant configuré avec au moins une adresse du protocole Internet d'une deuxième version du protocole Internet et étant situé dans un réseau permettant au moins l'acheminement de paquets ayant un en-tête de la deuxième version du protocole Internet ;
un moyen d'emplacement pour situer un premier agent (104) de la pluralité d'agents locaux à proximité d'un chemin direct entre le noeud mobile (100) et le premier noeud correspondant (102), le premier agent local (104) étant situé dans un réseau permettant au moins l'acheminement de paquets au noeud mobile avec les paquets ayant un en-tête de la première version du protocole Internet et l'acheminement de paquets au premier noeud correspondant avec les paquets ayant un en-tête de la deuxième version du protocole Internet ;
un moyen d'amorçage adapté pour amorcer le premier agent local (104) afin d'obtenir une première adresse locale de la deuxième version du protocole Internet et d'autres paramètres de communication ;
un moyen de transmission adapté pour envoyer un premier message de mise à jour de liaison comprenant l'adresse topologiquement correcte du noeud mobile de la première version du protocole Internet comme adresse temporaire et la première adresse locale comme adresse locale ; et
un moyen de communication adapté pour utiliser le premier agent local (104) dans un mode de tunnelisation bidirectionnel, l'en-tête externe des paquets tunnelisés utilisant la première version du protocole Internet et l'en-tête interne des paquets tunnelisés utilisant la deuxième version du protocole Internet, pour une communication avec le premier noeud correspondant (102), avec les paramètres de communication établis à l'étape d'amorçage et la première adresse locale comme adresse locale.

34. Noeud mobile de la revendication 33 adapté pour exécuter les étapes du procédé selon l'une des revendications 2 à 12.

35. Système de réseaux à commutation de paquets utilisant différentes versions du protocole Internet qui comprennent une pluralité d'agents locaux, au moins un noeud mobile et au moins un noeud correspondant, un premier noeud mobile (100) étant configuré avec au moins une adresse topologiquement correcte du protocole Internet d'une première version du protocole Internet et étant situé dans un réseau permettant au moins l'acheminement de paquets ayant un en-tête de la première version du protocole Internet, le système comprenant :
une application sur le premier noeud mobile (100) adaptée pour demander une communication avec un premier noeud correspondant (102) étant configuré avec au moins une adresse du protocole Internet d'une deuxième version du protocole Internet et étant situé dans un réseau permettant au moins l'acheminement de paquets ayant un en-tête de la deuxième version du protocole Internet ;
un moyen d'emplacement pour situer un premier agent (104) de la pluralité d'agents locaux à proximité d'un chemin direct entre le premier noeud mobile (100) et le premier noeud correspondant (102), le premier agent local (104) étant situé dans un réseau permettant au moins l'acheminement de paquets au premier noeud mobile (100) avec les paquets ayant un en-tête de la première version du protocole Internet et l'acheminement de paquets au premier noeud correspondant (102) avec les paquets ayant un en-tête de la deuxième version du protocole Internet ;
un moyen d'amorçage adapté pour amorcer le premier agent local (104) afin d'obtenir une première adresse locale de la deuxième version du protocole Internet et d'autres paramètres de communication ;
un moyen d'enregistrement adapté pour enregistrer l'emplacement du premier noeud mobile avec le premier agent local (104) en envoyant un premier message de mise à jour de liaison qui comprend l'adresse topologiquement correcte du noeud mobile de la première version du protocole Internet comme adresse temporaire et la première adresse locale comme adresse locale ; et où
le premier agent local (104) est adapté pour être utilisé dans un mode de tunnelisation bidirectionnel, l'en-tête externe des paquets tunnelisés utilisant la première version du protocole Internet et l'en-tête interne des paquets tunnelisés utilisant la deuxième version du protocole Internet, pour une communication avec le premier noeud correspondant (102), avec les paramètres de communication établis à l'étape d'amorçage et la première adresse locale comme adresse locale.

36. Système selon la revendication 35 adapté pour exécuter les étapes du procédé selon l'une des revendications 2 à 12.

37. Support lisible par ordinateur stockant des instructions qui, lorsqu'elles sont exécutées par un processeur d'un noeud mobile dans un système de réseaux à commutation de paquets en utilisant différentes versions du protocole Internet qui comprennent une pluralité d'agents locaux et au moins un noeud correspondant, le noeud mobile étant configuré avec au moins une adresse topologiquement correcte du protocole Internet d'une première version du protocole Internet et étant situé dans un réseau permettant au moins l'acheminement de paquets ayant un en-tête de la première version du protocole Internet, amènent le noeud mobile à exécuter les étapes suivantes :
demander une communication avec un premier noeud correspondant étant configuré avec au moins une adresse du protocole Internet d'une deuxième version du protocole Internet et étant situé dans un réseau permettant au moins l'acheminement de paquets ayant un en-tête de la deuxième version du protocole Internet, par une application sur le premier noeud mobile,
situer un premier agent de la pluralité d'agents locaux à proximité d'un chemin direct entre le noeud mobile et le premier noeud correspondant, le premier agent local étant situé dans un réseau permettant au moins l'acheminement de paquets au noeud mobile avec les paquets ayant un en-tête de la première version du protocole Internet et l'acheminement de paquets au premier noeud correspondant avec les paquets ayant un en-tête de la deuxième version du protocole Internet ;
amorcer le premier agent local pour obtenir une première adresse locale de la deuxième version du protocole Internet et d'autres paramètres de communication ;
envoyer un premier message de mise à jour de liaison comprenant une adresse topologiquement correcte du premier noeud mobile de la première version du protocole Internet comme adresse temporaire et la première adresse locale comme adresse locale ; et
utiliser le premier agent local dans un mode de tunnelisation bidirectionnel, l'en-tête externe des paquets tunnelisés utilisant la première version du protocole Internet et l'en-tête interne des paquets tunnelisés utilisant la deuxième version du protocole Internet, pour une communication avec le premier noeud correspondant, avec les paramètres de communication établis à l'étape d'amorçage et la première adresse locale comme adresse locale.

38. Support lisible par ordinateur selon la revendication 37 stockant des instructions qui, lorsqu'elles sont exécutées par un processeur d'un noeud mobile dans un système de réseaux à commutation de paquets en utilisant différentes versions du protocole Internet qui comprennent une pluralité d'agents locaux et au moins un noeud correspondant, le noeud mobile étant configuré avec au moins une adresse topologiquement correcte du protocole Internet d'une première version du protocole Internet et étant situé dans un réseau permettant au moins l'acheminement de paquets ayant un en-tête de la première version du protocole Internet, amènent le noeud mobile à exécuter les étapes du procédé selon l'une des revendications 2 à 12.

39. Noeud mobile (100) pour un système de réseaux à commutation de paquets utilisant différentes versions du protocole Internet qui comprennent une pluralité d'agents locaux et au moins un noeud correspondant, le noeud mobile (100) étant configuré avec au moins une adresse topologiquement correcte du protocole Internet d'une première version du protocole Internet et une première adresse locale d'une deuxième version du protocole Internet et étant situé dans un réseau permettant au moins l'acheminement de paquets ayant un en-tête de la première version du protocole Internet, le noeud mobile comprenant :
un moyen de réception adapté pour recevoir des premiers paquets de données d'un premier noeud correspondant (102) tunnelisés sur un premier agent local (104) ;
un moyen d'emplacement adapté pour situer un deuxième agent (206) de la pluralité d'agents locaux à proximité d'un chemin direct entre le noeud mobile (100) et le premier noeud correspondant (102), le deuxième agent local étant situé dans un réseau permettant au moins l'acheminement de paquets au noeud mobile (100) avec les paquets ayant un en-tête de la première version du protocole Internet et l'acheminement de paquets au premier noeud correspondant (102) avec les paquets ayant un en-tête de la deuxième version du protocole Internet ;
un moyen d'amorçage adapté pour amorcer le deuxième agent local (206) afin d'obtenir une deuxième adresse locale de la deuxième version du protocole Internet et d'autres paramètres de communication ;
un moyen de transmission adapté pour envoyer une première mise à jour de liaison comprenant l'adresse topologiquement correcte du noeud mobile de la première version du protocole Internet comme adresse temporaire et la deuxième adresse locale comme adresse locale.
le moyen de transmission étant en plus adapté pour envoyer un premier message d'initialisation de test temporaire au premier noeud correspondant (102) sur un tunnel bidirectionnel au deuxième agent local (206), l'en-tête externe des paquets tunnelisés utilisant la première version du protocole Internet et l'en-tête interne des paquets tunnelisés utilisant la deuxième version du protocole Internet, avec une adresse source dans l'en-tête du protocole Internet du premier message d'initialisation de test temporaire envoyé à la deuxième adresse locale ;
le moyen de réception étant en plus adapté pour recevoir un message de test temporaire du premier noeud correspondant (102) sur le tunnel bidirectionnel au deuxième agent local (206) ;
le moyen de transmission étant en plus adapté pour envoyer un deuxième message de mise à jour de liaison comprenant la deuxième adresse locale comme adresse temporaire et la première adresse locale comme adresse locale, le deuxième message de mise à jour de liaison envoyé sur le tunnel bidirectionnel au deuxième agent local (206), l'en-tête externe des paquets tunnelisés utilisant la première version du protocole Internet et l'en-tête interne des paquets tunnelisés utilisant la deuxième version du protocole Internet ; et
un moyen de communication adapté pour utiliser le mode d'optimisation de route sur le tunnel bidirectionnel au deuxième agent local (206), l'en-tête externe des paquets tunnelisés utilisant la première version du protocole Internet et l'en-tête interne des paquets tunnelisés utilisant la deuxième version du protocole Internet, pour une communication entre le noeud mobile (100) et le premier noeud correspondant (102) avec les paramètres de communication établis par le moyen d'amorçage en envoyant des paquets de données destinés au premier noeud correspondant (102) par le noeud mobile (100) sur le tunnel bidirectionnel au deuxième agent local (206), les paquets de données dans le tunnel comprenant la première adresse locale dans une option d'adresse locale, la deuxième adresse locale comme adresse source dans l'en-tête du protocole Internet et l'adresse du premier noeud correspondant comme adresse de destination dans l'en-tête du protocole internet.

40. Noeud mobile selon la revendication 39 adapté pour exécuter les étapes du procédé des revendications 14 à 32.

41. Système de réseaux à commutation de paquets utilisant différentes versions du protocole Internet qui comprennent une pluralité d'agents locaux, au moins un noeud mobile et au moins un noeud correspondant, un premier noeud mobile (100) étant configuré avec au moins une adresse topologiquement correcte du protocole Internet d'une première version du protocole Internet et une première adresse locale d'une deuxième version du protocole Internet et étant situé dans un réseau permettant au moins l'acheminement de paquets ayant un en-tête de la première version du protocole Internet, le système comprenant :
une application sur un premier noeud correspondant (102) étant configurée avec au moins une adresse du protocole Internet d'une deuxième version du protocole Internet et étant située dans un réseau permettant au moins l'acheminement de paquets ayant un en-tête de la deuxième version du protocole Internet une session de communication avec le premier noeud mobile (100) en envoyant des paquets de données ayant un en-tête de la deuxième version du protocole Internet à la première adresse locale du premier noeud mobile, la première adresse locale et une première adresse des adresses topologiquement correctes du noeud mobile étant enregistrée à un premier agent local (104) ;
le premier noeud mobile (100) étant adapté pour recevoir les premiers paquets de données du premier noeud correspondant (102) tunnelisés sur le premier agent local (104) ;
un moyen d'emplacement adapté pour situer un deuxième agent (206) de la pluralité d'agents locaux à proximité d'un chemin direct entre le premier noeud mobile (100) et le premier noeud correspondant (102), le deuxième agent local (206) étant situé dans un réseau permettant au moins l'acheminement de paquets au premier noeud mobile (100) avec les paquets ayant un en-tête de la première version du protocole Internet et l'acheminement de paquets au premier noeud correspondant (102) avec les paquets ayant un en-tête de la deuxième version du protocole Internet ;
un moyen d'amorçage adapté pour amorcer le deuxième agent local (206) afin d'obtenir une deuxième adresse locale de la deuxième version du protocole Internet et d'autres paramètres de communication ;
le premier noeud mobile (100) étant en plus adapté pour :
envoyer une première mise à jour de liaison comprenant l'adresse topologiquement correcte du premier noeud mobile de la première version du protocole Internet comme adresse temporaire et la deuxième adresse locale comme adresse locale ;
envoyer un premier message d'initialisation de test temporaire au premier noeud correspondant (102) sur un tunnel bidirectionnel au deuxième agent local, l'en-tête externe des paquets tunnelisés utilisant la première version du protocole Internet et l'en-tête interne des paquets tunnelisés utilisant la deuxième version du protocole Internet, avec une adresse source dans l'en-tête du protocole Internet du premier message d'initialisation de test temporaire établi à la deuxième adresse locale ;
recevoir un message de test temporaire du premier noeud correspondant (102) sur le tunnel bidirectionnel au deuxième agent local ;
envoyer un deuxième message de mise à jour de liaison comprenant la deuxième adresse locale comme adresse temporaire et la première adresse locale comme adresse locale, le deuxième message de mise à jour de liaison envoyé sur le tunnel bidirectionnel au deuxième agent local (206), l'en-tête externe des paquets tunnelisés utilisant la première version du protocole Internet et l'en-tête interne des paquets en tunnel utilisant la deuxième version du protocole Internet ; et
utiliser le mode d'optimisation de route sur le tunnel bidirectionnel au deuxième agent local (206), l'en-tête externe des paquets tunnelisés utilisant la première version du protocole Internet et l'en-tête interne des paquets tunnelisés utilisant la deuxième version du protocole Internet, pour une communication entre le premier noeud mobile (100) et le premier noeud correspondant (102) avec les paramètres de communication établis par le moyen d'amorçage en envoyant des paquets de données destinés au premier noeud correspondant (102) par le premier noeud mobile (100) sur le tunnel bidirectionnel au deuxième agent local (206), les paquets de données dans le tunnel comprenant la première adresse locale dans une option d'adresse locale, la deuxième adresse locale comme adresse source dans l'en-tête du protocole Internet et l'adresse du premier noeud correspondant comme adresse de destination de l'en-tête du protocole internet.

42. Système de la revendication 41 adapté pour exécuter les étapes du procédé de l'une des revendications 14 à 33.

43. Support lisible par ordinateur stockant des instructions qui, lorsqu'elles sont exécutées par un processeur d'un noeud mobile dans un système de réseaux à commutation de paquets en utilisant différentes versions du protocole Internet qui comprennent une pluralité d'agents locaux et au moins un noeud correspondant, le noeud mobile étant configuré avec au moins une adresse topologiquement correcte du protocole Internet d'une première version du protocole Internet et une première adresse locale d'une deuxième version du protocole Internet et étant situé dans un réseau permettant au moins l'acheminement de paquets ayant un en-tête de la première version du protocole Internet, amènent le noeud mobile à exécuter les étapes suivantes :
recevoir des premiers paquets de données d'un premier noeud correspondant tunnelisés sur un premier agent local ;
situer un deuxième agent de la pluralité d'agents locaux à proximité d'un chemin direct entre le noeud mobile et le premier noeud correspondant, le deuxième agent local étant situé dans un réseau permettant au moins l'acheminement de paquets au noeud mobile avec les paquets ayant un en-tête de la première version du protocole Internet et l'acheminement de paquets au premier noeud correspondant avec les paquets ayant un en-tête de la deuxième version du protocole Internet ;
amorcer le deuxième agent local afin d'obtenir une deuxième adresse locale de la deuxième version du protocole Internet et d'autres paramètres de communication ;
envoyer une première mise à jour de liaison comprenant l'adresse topologiquement correcte du noeud mobile de la première version du protocole Internet comme adresse temporaire et la deuxième adresse locale comme adresse locale ;
envoyer un premier message d'initialisation de test temporaire au premier noeud correspondant sur un tunnel bidirectionnel au deuxième agent local, l'en-tête externe des paquets tunnelisés utilisant la première version du protocole Internet et l'en-tête interne des paquets tunnelisés utilisant la deuxième version du protocole Internet, avec une adresse source dans l'en-tête du protocole Internet du premier message d'initialisation de test temporaire établi à la deuxième adresse locale,
recevoir un message de test temporaire du premier noeud correspondant sur le tunnel bidirectionnel au deuxième agent local ;
envoyer un deuxième message de mise à jour de liaison comprenant la deuxième adresse locale comme adresse temporaire et la première adresse locale comme adresse locale, le deuxième message de mise à jour de liaison envoyé sur le tunnel bidirectionnel au deuxième agent local, l'en-tête externe des paquets tunnelisés utilisant la première version du protocole Internet et l'en-tête interne des paquets tunnelisés utilisant la deuxième version du protocole Internet ; et
utiliser le mode d'optimisation de route sur le tunnel bidirectionnel au deuxième agent local, l'en-tête externe des paquets tunnelisés utilisant la première version du protocole Internet et l'en-tête interne des paquets tunnelisés utilisant la deuxième version du protocole Internet, pour une communication entre le premier noeud mobile et le premier noeud correspondant avec les paramètres de communication établis à l'étape d'amorçage en envoyant des paquets de données destinés au premier noeud correspondant par le premier noeud mobile sur le tunnel bidirectionnel au deuxième agent local, les paquets de données dans le tunnel comprenant la première adresse locale dans une option d'adresse locale, la deuxième adresse locale comme adresse source dans l'en-tête du protocole Internet et l'adresse du premier noeud correspondant comme adresse de destination dans l'en-tête du protocole internet.

44. Support lisible par ordinateur selon la revendication 43 stockant des instructions qui, lorsqu'elles sont exécutées par un processeur d'un noeud mobile dans un système de réseaux à commutation de paquets en utilisant différentes versions du protocole Internet comprenant une pluralité d'agents locaux et au moins un noeud correspondant, le noeud mobile étant configuré avec au moins une adresse topologiquement correcte du protocole Internet d'une première version du protocole Internet et une première adresse locale d'une deuxième version du protocole Internet et étant situé dans un réseau permettant au moins l'acheminement de paquets ayant un en-tête de la première version du protocole Internet, amènent le noeud mobile à exécuter les étapes selon l'une des revendications 14 à 32.
